# EUROPÄISCHE PATENTSCHRIFT

(11) **EP 3 807 860 B1**
(45) Veröffentlichungstag und Bekanntmachung des Hinweises auf die Patenterteilung: **02.10.2024**
(21) Anmeldenummer: 18734149.0
(22) Anmeldetag: 18.06.2018
(51) Int. Cl.: G08G 1/16, G01S 13/93, G10K 11/18

(54) **KRAFTFAHRZEUG, UMFASSEND EINE VORRICHTUNG ZUR AUSGABE EINES AUDIOSIGNALS IN EINE FAHRGASTZELLE DES KRAFTFAHRZEUGS**
MOTOR VEHICLE, COMPRISING AN APPARATUS FOR OUTPUTTING AN AUDIO SIGNAL TO A PASSENGER COMPARTMENT OF THE MOTOR VEHICLE
VÉHICULE AUTOMOBILE COMPRENANT UN DISPOSITIF D'ÉMISSION D'UN SIGNAL AUDIO DANS L'HABITACLE DU VÉHICULE AUTOMOBILE

(43) Veröffentlichungstag der Anmeldung: 21.04.2021
(73) Patentinhaber: ASK Industries GmbH, 94559 Niederwinkling (DE)
(72) Erfinder: SRINIDHI SADASHIVA, Marathe, 94559 Niederwinkling (DE)
(74) Vertreter: Hafner & Kohl PartmbB
(86) Internationale Anmeldenummer: PCT/EP2018/066143
(87) Internationale Veröffentlichungsnummer: WO 2019/242838

(56) Entgegenhaltungen:
- DE-A1- 102016 103 344
- DE-A1- 19 919 216
- US-A1- 2002 196 134
- US-A1- 2003 108 212

## Beschreibung

Die Erfindung betrifft ein Kraftfahrzeug, umfassend eine Vorrichtung zur Ausgabe eines Audiosignals in eine Fahrgastzelle des Kraftfahrzeugs, welche eine mehrere in einer Fahrgastzelle des Kraftfahrzeugs angeordnete Audioausgabeelemente umfassende Audioausgabeeinrichtung zur Ausgabe eines Audiosignals in die Fahrgastzelle des Kraftfahrzeugs, sowie eine der Audioausgabeeinrichtung zuordenbare oder zugeordnete Steuereinrichtung zur Steuerung der Ausgabe des über jeweilige Audioausgabeelemente ausgebbaren Audiosignals, insbesondere zur Steuerung wenigstens eines Ausgabeparameters des über jeweilige Audioausgabeelemente ausgebbaren Audiosignals, umfasst.

Kraftfahrzeuge, d. h. insbesondere Personenkraftfahrzeuge, mit entsprechenden Vorrichtungen zur Ausgabe von Audiosignalen bzw. -inhalten in die Fahrgastzelle sind seit langem bekannt. Aufgabe und Funktion entsprechender Vorrichtungen besteht typischerweise darin, dem oder den Fahrzeuginsassen während der Nutzung des Kraftfahrzeugs, etwa zum Zweck der Information, Kommunikation oder Unterhaltung, Audiosignale bzw. -inhalte bereitzustellen.

US 2002/196134 A1 offenbart ein als "Object Collision Detection" bezeichnetes Prinzip zur sensorbasierten Erkennung von möglicherweise kollidierenden Objekten im Umfeld um ein Fahrzeug und die Ausgabe eines in Abhängigkeit einer Relativposition zwischen einem erkannten Objekt und dem Fahrzeug erzeugten und die Relativposition akustisch abbildenden Warnsignals in eine Fahrgastzelle des Fahrzeugs.

Angesichts des stetigen Bestrebens nach Weiterentwicklungen der Fahrsicherheit von Kraftfahrzeugen, besteht ein Bedarf nach technisch zweckmäßigen Überlegungen, den Funktionsumfang entsprechender Vorrichtungen, insbesondere im Zusammenhang mit kraftfahrzeugseitig ohnehin vorhandenen Assistenz- bzw. Sicherheitssystemen, welche eine Überwachung des Umfelds um das Kraftfahrzeug, insbesondere unter dem Aspekt möglicher fahrsicherheitsrelevanter Situationen, ermöglichen, dahin zu erweitern, dass auch die über entsprechende Vorrichtungen erfolgende Ausgabe von Audiosignalen in die Fahrgastzelle zu fahrsicherheitsrelevanten bzw. -technischen Zwecken genutzt werden kann.

Der Erfindung liegt die Aufgabe zugrunde, ein Kraftfahrzeug mit einer Vorrichtung zur Ausgabe von Audiosignalen in die Fahrgastzelle des Kraftfahrzeugs anzugeben, deren Funktionsumfang, insbesondere im Hinblick auf fahrsicherheitsrelevante bzw. -technische Zwecke, erweitert ist.

Die Aufgabe wird durch ein Kraftfahrzeug, umfassend eine Vorrichtung zur Ausgabe eines Audiosignals in die Fahrgastzelle des Kraftfahrzeugs gemäß Anspruch 1 gelöst. Die hierzu abhängigen Ansprüche betreffen mögliche Ausführungsformen des Kraftfahrzeugs.

Das hierin beschriebene Kraftfahrzeug - hierbei handelt es sich insbesondere um einen Personenkraftwagen - umfasst eine Vorrichtung zur Ausgabe eines oder mehrerer Audiosignale in die Fahrgastzelle des Kraftfahrzeugs. Die Vorrichtung kann einen funktionellen Bestandteil einer kraftfahrzeugseitigen Multimediaeinrichtung zur Ausgabe von Multimediasignalen bzw. -inhalten in die Fahrgastzelle des Kraftfahrzeugs bilden. Vermittels der Vorrichtung lassen sich Musik- und/oder Sprachsignale in die Fahrgastzelle des Kraftfahrzeugs ausgeben. Unter einem Audiosignal ist damit ein Musik- und/oder Sprachsignal zu verstehen; ein Audiosignal enthält kann sonach Audioinhalte wie Musik und/oder Sprache. Wie sich im Weiteren ergibt, kann ein Audiosignal zusätzlich ein Bewegungsinformationssignal beinhalten. Unabhängig von dessen konkretem Inhalt beinhaltet ein Audiosignal typischerweise mehrere jeweils durch bestimmte Frequenzen bzw. Frequenzbereiche definierbare bzw. definierte Audiosignalanteile, d. h. z. B. Höhen, Mitten, Bässe.

Die Vorrichtung umfasst eine Audioausgabeeinrichtung zur Ausgabe eines oder mehrerer Audiosignale in die Fahrgastzelle des Kraftfahrzeugs. Die hardware- und/oder softwaremäßig implementierte Audioausgabeeinrichtung ist sonach zur Verarbeitung wenigstens eines, z. B. über eine körperliche oder nicht-körperliche Audiosignalquelle bereitgestellten, Audiosignals im Hinblick auf eine Ausgabe dieses in die Fahrgastzelle des Kraftfahrzeugs eingerichtet. Die Audioausgabeeinrichtung umfasst mehrere in der Fahrgastzelle des Kraftfahrzeugs angeordnete Audioausgabeelemente. Die Audioausgabeelemente sind typischerweise in unterschiedlichen Bereichen der Fahrgastzelle angeordnet, um das wenigstens eine Audiosignal aus unterschiedlichen Bereichen der Fahrgastzelle und somit aus unterschiedlichen Ausgaberichtungen in die Fahrgastzelle auszugeben. Typischerweise ist wenigstens ein Audioausgabeelement im Bereich links einer Längs(mittel)achse des Kraftfahrzeugs und wenigstens ein Audioausgabeelement im Bereich rechts der Längs(mittel)achse des Kraftfahrzeugs angeordnet. Entsprechende links der Längs(mittel)achse des Kraftfahrzeugs angeordnete Audioausgabeelemente können vor oder hinter einer Quer(mittel)achse des Kraftfahrzeugs, d. h. im Bereich der Front oder des Hecks des Kraftfahrzeugs, angeordnet sein. Auch entsprechende rechts der Längs(mittel)achse des Kraftfahrzeugs angeordnete Audioausgabeelemente können vor oder hinter einer Quer(mittel)achse des Kraftfahrzeugs, d. h. im Bereich der Front oder des Hecks des Kraftfahrzeugs, angeordnet sein. Selbstverständlich kann wenigstens ein Audioausgabeelement auch im Bereich der Längs(mittel)achse und/oder im Bereich der Quer(mittel)achse des Kraftfahrzeugs angeordnet sein.

Der Betrieb der Audioausgabeelemente kann abhängig oder unabhängig voneinander gesteuert werden. Hierunter ist insbesondere zu verstehen, dass die Audioausgabeelemente abhängig oder unabhängig voneinander in oder außer Betrieb genommen werden können. Hierunter ist jedoch auch zu verstehen, dass die Audioausgabeelemente abhängig oder unabhängig voneinander mit gleichen oder unterschiedlichen Audioausgabeparametern, wie z. B. Intensität bzw. Lautstärke, abhängig oder unabhängig voneinander betrieben werden können.

Die Audioausgabeelemente können insbesondere als wenigstens einen Lautsprecher umfassende Lautsprecherelemente ausgebildet sein oder solche umfassen.

Die Vorrichtung umfasst weiterhin eine der Audioausgabeeinrichtung zuordenbare oder zugeordnete hardware- und/oder softwaremäßig implementierte Steuereinrichtung. Die Steuereinrichtung ist zur Steuerung der Ausgabe wenigstens eines Audiosignals über jeweilige Audioausgabeelemente eingerichtet. Die Steuereinrichtung ist zur Steuerung wenigstens eines Audioausgabeparameters des wenigstens einen über jeweilige Audioausgabeelemente ausgebbaren Audiosignals eingerichtet. Wie erwähnt, kann es sich bei einem Audioausgabeparameter z. B. um die Intensität des auszugebenden bzw. ausgegebenen Audiosignals handeln.

Die Steuereinrichtung ist eingerichtet, die Ausgabe eines Audiosignals in die Fahrgastzelle des Kraftfahrzeugs auf Grundlage einer eine Bewegung wenigstens eines Objekts, d. h. insbesondere eines weiteren Verkehrsteilnehmers, wie z. B. eines weiteren Kraftfahrzeugs, relativ zu dem Kraftfahrzeug beschreibenden Bewegungsinformation zu steuern. Die Ausgabe eines Audiosignals in die Fahrgastzelle des Kraftfahrzeugs und die Ausgaberichtung des Audiosignals - hierunter ist im Besonderen die von einem in der Fahrgastzelle befindlichen Fahrzeuginsassen akustisch empfundene bzw. wahrgenommene Ausgaberichtung des in die Fahrgastzelle ausgegebenen Audiosignals zu verstehen - lässt sich sonach auf Grundlage der eine erfasste Bewegung eines im Umfeld um das Kraftfahrzeug befindlichen Objekts relativ zu dem Kraftfahrzeug beschreibenden Bewegungsinformation steuern. Die Steuereinrichtung ist sonach eingerichtet, Steuerungsparameter zur Steuerung der Ausgabe wenigstens eines in die Fahrgastzelle auszugebenden Audiosignals zu erzeugen, welche einem Fahrzeuginsassen einen akustisch wahrnehmbaren Zusammenhang zwischen einem im Umfeld um das Kraftfahrzeug befindlichen, sich relativ zu dem Kraftfahrzeug bewegenden Objekt respektive der Bewegung des sich im Umfeld um das Kraftfahrzeug befindlichen Objekts relativ zu dem Kraftfahrzeug und dem eigenen Kraftfahrzeug vermittelt, und die Ausgabe des wenigstens einen Audiosignals auf Grundlage der Steuerungsparameter durchzuführen. Die entsprechend gesteuerte Ausgabe des wenigstens einen Audiosignals bildet sonach etwaige sich im Umfeld um das Kraftfahrzeug befindliche und sich relativ zu dem Kraftfahrzeug bewegende Objekte ab. Einem Fahrzeuginsassen wird sonach über die besondere Steuerung der Ausgabe des Audiosignals der erwähnte akustisch wahrnehmbare Zusammenhang zwischen im Umfeld um das Kraftfahrzeug befindlichen, sich relativ zu dem Kraftfahrzeug bewegenden Objekten respektive entsprechender Objekte relativ zu dem Kraftfahrzeug und dem Kraftfahrzeug vermittelt. Dies erfolgt unabhängig von dem eigentlichen Inhalt des auszugebenden Audiosignals allein über die Steuerung der Ausgabe bzw. der Ausgaberichtung des Audiosignals; der eigentliche Inhalt des Audiosignals wird sonach nicht verändert.

Die Steuerung der Ausgabe des wenigstens einen Audiosignals, d. h. insbesondere die Steuerung der Ausgaberichtung des wenigstens einen Audiosignals, kann einem Fahrzeuginsassen sonach im Sinne eines akustisch wahrnehmbaren Feedbacks vermitteln, dass sich ein im Umfeld um das Kraftfahrzeug befindliches Objekt relativ zu dem Kraftfahrzeug bewegt. Mithin kann die Steuerung des wenigstens einen Audiosignals neben dem eigentlichen Zweck der Wiedergabe jeweiliger durch das Audiosignal abgebildeter Audioinhalte, bei welchen es sich, wie erwähnt, beispielsweise um Musik und/oder Sprache handeln kann, welche typischerweise auch während der Steuerung der Ausgabe des Audiosignals gegeben ist, durch gezielte Steuerung der Ausgaberichtung sonach auch dazu genutzt werden, um einem Fahrzeuginsassen, d. h. insbesondere dem Fahrer, eine möglichst gute Information über sich im Umfeld um das Kraftfahrzeug befindliche, relativ zu dem Kraftfahrzeug bewegende Objekte zu vermitteln.

Insbesondere können, z. B. aufgrund einer bestimmten Relativposition zu dem Kraftfahrzeug, für einen Fahrzeuginsassen nicht sichtbare Objekte durch entsprechende Steuerung der Ausgabe des wenigstens einen Audiosignals für den Fahrzeuginsassen akustisch wahrnehmbar werden, sodass der Fahrzeuginsasse, d. h. insbesondere der Fahrer, durch eine vermittels der Steuereinrichtung erfolgende gezielte Steuerung der Ausgabe des wenigstens einen Audiosignals, d. h. insbesondere eine vermittels der Steuereinrichtung erfolgende gezielte Steuerung der Ausgaberichtung des wenigstens einen Audiosignals, auf nicht sichtbare Objekte im Umfeld um das Kraftfahrzeug hingewiesen wird. Die Steuerung kann z. B. eine gezielte Veränderung der Ausgabe des wenigstens einen Audiosignals, d. h. insbesondere eine gezielte Veränderung der Ausgaberichtung des wenigstens einen Audiosignals, erfolgen, anhand welcher ein Fahrzeuginsasse auf ein nicht sichtbares Objekt im Umfeld um das Kraftfahrzeug hingewiesen werden kann. Wie sich im Weiteren ergibt, besteht typischerweise ein akustisch wahrnehmbarer Zusammenhang zwischen der Position des Objekts relativ zu dem Kraftfahrzeug und der Steuerung der Ausgaberichtung des Audiosignals. Zwischen Bewegungen des Objekts relativ zu dem Kraftfahrzeug und einer Veränderung der Ausgaberichtung des Audiosignals kann ebenfalls ein akustisch wahrnehmbarer Zusammenhang bestehen.

Dem Fahrzeuginsassen, d. h. insbesondere dem Fahrer, können über die auf Grundlage der Objektsituation im Umfeld um das Kraftfahrzeug, d. h. insbesondere auf Grundlage der Bewegungen von Objekten relativ zu dem Kraftfahrzeug, dynamisch bzw. variabel steuerbare bzw. gesteuerte Ausgabe des Audiosignals, d. h. insbesondere die dynamisch bzw. variable steuerbare bzw. gesteuerte Änderung der Ausgaberichtung des Audiosignals, sonach fahrsicherheitsrelevante Aspekte über die Objektsituation im Umfeld um das Kraftfahrzeug vermittelt werden. Der Funktionsumfang der Vorrichtung ist sonach im Hinblick auf fahrsicherheitsrelevante bzw. -technische Zweck erweitert.

Die Audioausgabeeinrichtung kann zur, insbesondere parallelen bzw. zeitgleichen, Ausgabe wenigstens zweier unterschiedlicher Audiosignale in die Fahrgastzelle des Kraftfahrzeugs eingerichtet sein. Unabhängig von deren konkretem Inhalt können jeweilige erste und zweite Audiosignale über gleiche oder unterschiedliche Audioausgabeelemente und/oder mit gleichen oder ungleichen Audioausgabeparametern ausgegeben werden.

Ein erstes Audiosignal ist ein Musik- oder Sprachsignal. Ein zweites Audiosignal kann ein, insbesondere künstlich erzeugtes, Bewegungsinformationssignal sein, welches andere Audioinhalte als Musik und/oder Sprache, d. h. keine Musik und/oder Sprache, beinhaltet. Ein Bewegungsinformationssignal kann, z. B. in Form eines Tons oder einer Tonfolge einer bestmimten Frequenz bzw. eines bestimmten Frequenzbereichs, eine Bewegung wenigstens eines Objekts, insbesondere eines anderen Verkehrsteilnehmers, relativ zu dem Kraftfahrzeug andeuten bzw. beschreiben. Bei einem Bewegungsinformationssignal kann es sich sonach um ein zu einem ohnehin ausgegebenen Audiosignal, d. h. z. B. einem Musik- oder Sprachsignal, gesondert bzw. zusätzlich erzeugtes und zusätzlich ausgegebenes Audiosignal handeln, welches dazu dient, einem Fahrzeuginsassen eine Bewegung wenigstens eines Objekts, insbesondere eines Verkehrsteilnehmers, relativ zu dem Kraftfahrzeug andeuten. Ein Bewegungsinformationssignal kann sonach, insbesondere im Gegensatz zu einem Musik- und/oder Sprachsignal, (erst) dann erzeugt und/oder ausgegeben werden, wenn ein sich relativ zu dem Kraftfahrzeug bewegendes Objekt erfasst wurde.

Ein Bewegungsinformationssignal kann insbesondere über die Steuereinrichtung erzeugt werden; die Steuereinrichtung kann sonach (auch) zur Erzeugung eines entsprechenden Bewegungsinformationssignals eingerichtet sein.

Die Steuereinrichtung kann ferner eingerichtet sein, wenigstens die Ausgabe eines entsprechenden Bewegungsinformationssignals in die Fahrgastzelle des Kraftfahrzeugs auf Grundlage der eine Bewegung wenigstens eines Objekts, insbesondere eines Verkehrsteilnehmers, relativ zu dem Kraftfahrzeug beschreibenden Bewegungsinformation zu steuern.

Mithin kann auch die Ausgabe bzw. Steuerung der Ausgabe eines entsprechenden Bewegungsinformationssignals, d. h. insbesondere die Steuerung der Ausgaberichtung des Bewegungsinformationssignals, einem Fahrzeuginsassen im Sinne eines akustisch wahrnehmbaren Feedbacks vermitteln, dass sich ein im Umfeld um das Kraftfahrzeug befindliches Objekt relativ zu dem Kraftfahrzeug bewegt. Folglich kann auch die gezielte Steuerung der Ausgaberichtung des Bewegungsinformationssignals dazu genutzt werden, um einem Fahrzeuginsassen, d. h. insbesondere dem Fahrer, eine möglichst gute Information über sich im Umfeld um das Kraftfahrzeug befindliche, relativ zu dem Kraftfahrzeug bewegende Objekte zu vermitteln.

Selbstverständlich kann auch die Ausgabe mehrerer unterschiedlicher Audiosignale, d. h. insbesondere eines entsprechenden Bewegungsinformationssignals sowie eines weiteren Audiosignals, wie z. B. eines Musik- und/oder Sprachsignals, jeweils auf Grundlage der eine Bewegung wenigstens eines Objekts, insbesondere eines Verkehrsteilnehmers, relativ zu dem Kraftfahrzeug beschreibenden Bewegungsinformation gesteuert werden.

Für alle Arten von auszugebenden bzw. ausgegebenen Audiosignalen gilt, dass diese mit einem bestimmten, insbesondere die Bewegung eines erfassten, sich relativ zu dem Kraftfahrzeug bewegenden Objekts abbildenden, Audio-Effekt ausgegeben werden können. Bei einem entsprechenden Audio-Effekt kann es sich z. B. um einen (künstlich erzeugten) Doppler-Effekt handeln. Die Effekte können ebenso seitens der Steuereinrichtung erzeugt werden; die Steuereinrichtung kann sonach zur Erzeugung von, insbesondere die Bewegung eines erfassten, sich relativ zu dem Kraftfahrzeug bewegenden Objekts abbildenden, Audio-Effekten eingerichtet sein.

Der Steuereinrichtung kann wenigstens eine kraftfahrzeugseitige hardware- und/oder softwaremäßig implementierte Erfassungseinrichtung zuordenbar oder zugeordnet sein, welche zur Erfassung einer Bewegung wenigstens eines Objekts relativ zu dem Kraftfahrzeug und zur Erzeugung der bzw. einer eine Bewegung wenigstens eines erfassten Objekts relativ zu dem Kraftfahrzeug beschreibenden Bewegungsinformation eingerichtet ist. Eine entsprechende Erfassungseinrichtung kann auch zur Abstands- bzw. Geschwindigkeitsmessung eingerichtet sein. Eine entsprechende Erfassungseinrichtung kann einen Bestandteil eines kraftfahrzeugseitigen Assistenz- oder Sicherheitssystems, d. h. z. B. eines Längs- und/oder Querführungssystems, Parksystems, etc., bilden. Insbesondere kann eine entsprechende Erfassungseinrichtung einen Bestandteil eines einen teil- oder vollautonomen Fahrbetrieb des Kraftfahrzeugs ermöglichenden Assistenzsystems bilden. Ein entsprechendes Assistenz- oder Sicherheitssystem kann über geeignete, z. B. akustische und/oder optische, Erfassungselemente, d. h. z. B. akustisch und/oder optische Sensorelemente, verfügen, welche zur Erfassung von Objekten im Umfeld um das Kraftfahrzeug respektive zur Erfassung der Bewegung von Objekten im Umfeld um das Kraftfahrzeug eingerichtet sind. Entsprechende Erfassungselemente können z. B. als Ultraschallelemente, Laserelemente, Lidarelemente, Radarelemente, etc. ausgebildet sein. Andere Ausgestaltungen sind denkbar.

Eine entsprechende Erfassungseinrichtung kann zur Erzeugung eines das Kraftfahrzeug zumindest abschnittsweise, insbesondere vollständig, umgebenden Erfassungsbereichs, in welchem eine Bewegung wenigstens eines Objekts relativ zu dem Kraftfahrzeug erfassbar ist, eingerichtet sein. Insbesondere kann eine entsprechende Erfassungseinrichtung zur Erfassung des Eintritts bzw. der Eintrittsposition sowie des Austritts bzw. der Austrittsposition entsprechender Objekte in den bzw. aus dem Erfassungsbereich eingerichtet sein. Selbstverständlich können typischerweise auch Bewegungen eines in den Erfassungsbereich eingetretenen Objekts innerhalb des Erfassungsbereichs erfasst werden.

Der Erfassungsbereich, d. h. insbesondere dessen Ausrichtung, Form und Größe, richtet sich typischerweise nach der Art, Anordnung und Betriebsweise der Erfassungseinrichtung bzw. der dieser zugehörigen Erfassungselemente. Es ist denkbar, dass durch ein oder mehrere Erfassungseinrichtungen bzw. -elemente ein das Kraftfahrzeug vollständig umgebender Erfassungsbereich gebildet werden kann. Das Kraftfahrzeug befindet sich typischerweise innerhalb, d. h. insbesondere im Mittelpunkt, eines entsprechenden Erfassungsbereichs.

Eine entsprechende Erfassungseinrichtung kann zur Erfassung von sich relativ zu dem Kraftfahrzeug bewegenden Objekten, d. h. insbesondere Verkehrsteilnehmern, wie z. B. anderen Kraftfahrzeugen, Radfahrern, Fußgänger, Tieren, etc., eingerichtet sein. Insbesondere kann die Erfassungseinrichtung zur Erfassung von sich in gleicher oder entgegengesetzter Richtung wie das Kraftfahrzeug bewegender Objekten, d. h. insbesondere Verkehrsteilnehmer, wie z. B. anderer Kraftfahrzeuge, Radfahrer, Fußgänger, Tiere, etc., eingerichtet sein.

Nachfolgend werden für beispielhafte durch entsprechende Bewegungsinformationen beschriebene Objektsituationen um das Kraftfahrzeug beispielhaft Möglichkeiten einer vermittels der Steuereinrichtung vornehmbaren bzw. vorgenommenen Steuerung der Ausgabe bzw. der Ausgaberichtung eines Audiosignals in die Fahrgastzelle des Kraftfahrzeugs erläutert:
Die Steuereinrichtung kann, insbesondere für den Fall eines sich rechts des Kraftfahrzeugs bewegenden Objekts, eingerichtet sein, die Ausgabe eines auszugebenden Audiosignals auf Grundlage einer eine Bewegung eines sich rechts des Kraftfahrzeugs bewegenden Objekts beschreibenden Bewegungsinformation über wenigstens ein rechts der Längsmittelachse des Kraftfahrzeugs angeordnetes Audioausgabeelement, insbesondere über alle rechts der Längsmittelachse des Kraftfahrzeugs angeordnete Audioausgabeelemente, zu steuern bzw. vorzunehmen. Insbesondere kann die Steuereinrichtung eingerichtet sein, die Ausgabe eines Audiosignals auf Grundlage einer eine Bewegung eines sich rechts des Kraftfahrzeugs bewegenden Objekts beschreibenden Bewegungsinformation über wenigstens ein rechts der Längsmittelachse des Kraftfahrzeugs angeordnetes Audioausgabeelement, insbesondere über alle rechts der Längsmittelachse des Kraftfahrzeugs angeordnete Audioausgabeelemente, mit einer im Vergleich höheren Intensität als über wenigstens ein links der Längsmittelachse des Kraftfahrzeugs angeordnetes Audioausgabeelement, insbesondere über alle links der Längsmittelachse des Kraftfahrzeugs angeordnete Audioausgabeelemente, zu steuern bzw. vorzunehmen. Dem Fahrzeuginsassen kann sonach über eine in diesem Fall und für diesen Fall erfolgende Ausgabe des Audiosignals über ein oder mehrere rechts der Längsmittelachse des Kraftfahrzeugs angeordnete Audioausgabeelemente akustisch wahrnehmbar vermittelt werden, dass sich ein Objekt (typischerweise bezogen auf die Fahrtrichtung des Kraftfahrzeugs) rechts des Kraftfahrzeugs befindet und sich relativ zu dem Kraftfahrzeug bewegt. Entsprechendes ließe sich gegebenenfalls auch mit einer im Vergleich niedrigeren Intensität implementieren.

Die Steuereinrichtung kann in analoger Weise, insbesondere für den Fall eines sich links des Kraftfahrzeugs bewegenden Objekts, eingerichtet sein, die Ausgabe eines auszugebenden Audiosignals auf Grundlage einer eine Bewegung eines sich links des Kraftfahrzeugs bewegenden Objekts beschreibenden Bewegungsinformation über wenigstens ein links der Längsmittelachse des Kraftfahrzeugs angeordnetes Audioausgabeelement, insbesondere über alle links der Längsmittelachse des Kraftfahrzeugs angeordnete Audioausgabeelemente, zu steuern bzw. vorzunehmen. Insbesondere kann die Steuereinrichtung eingerichtet sein, die Ausgabe eines Audiosignals auf Grundlage einer eine Bewegung eines sich links des Kraftfahrzeugs bewegenden Objekts beschreibenden Bewegungsinformation über wenigstens ein links der Längsmittelachse des Kraftfahrzeugs angeordnetes Audioausgabeelement, insbesondere über alle links der Längsmittelachse des Kraftfahrzeugs angeordnete Audioausgabeelemente, mit einer im Vergleich höheren Intensität als über wenigstens ein rechts der Längsmittelachse des Kraftfahrzeugs angeordnetes Audioausgabeelement, insbesondere über alle rechts der Längsmittelachse des Kraftfahrzeugs angeordnete Audioausgabeelemente, zu steuern bzw. vorzunehmen. Dem Fahrzeuginsassen kann sonach über die in diesem Fall und für diesen Fall erfolgende Ausgabe des Audiosignals über ein oder mehrere links der Längsmittelachse des Kraftfahrzeugs angeordnete Audioausgabeelemente akustisch wahrnehmbar vermittelt werden, dass sich ein Objekt (typischerweise bezogen auf die Fahrtrichtung des Kraftfahrzeugs) links des Kraftfahrzeugs befindet und sich relativ zu dem Kraftfahrzeug bewegt. Entsprechendes ließe sich gegebenenfalls auch mit einer im Vergleich niedrigeren Intensität implementieren.

Die Steuereinrichtung kann, insbesondere für den Fall eines sich frontal auf das Kraftfahrzeug zu bewegenden Objekts, eingerichtet sein, die Ausgabe eines auszugebenden Audiosignals auf Grundlage einer eine Bewegung eines sich frontal auf das Kraftfahrzeug zu bewegenden Objekts beschreibenden Bewegungsinformation über wenigstens ein vor einer Quermittelachse des Kraftfahrzeugs und somit im Bereich der Front des Kraftfahrzeugs angeordnetes Audioausgabeelement, insbesondere über alle vor der Quermittelachse angeordnete Audioausgabeelemente, zu steuern bzw. vorzunehmen. Insbesondere kann die Steuereinrichtung eingerichtet sein, die Ausgabe eines Audiosignals auf Grundlage einer eine Bewegung eines sich frontal auf das Kraftfahrzeug zu bewegenden Objekts beschreibenden Bewegungsinformation über wenigstens ein vor der Quermittelachse des Kraftfahrzeugs angeordnetes Audioausgabeelement, insbesondere über alle vor der Quermittelachse angeordnete Audioausgabeelemente, mit einer im Vergleich zu einer vordefinierbaren oder vordefinierten Referenzintensität höheren Intensität als über wenigstens ein hinter der Quermittelmittelachse des Kraftfahrzeugs und somit im Bereich des Hecks des Kraftfahrzeugs angeordnetes Audioausgabeelement, insbesondere über alle hinter der Quermittelachse des Kraftfahrzeugs angeordnete Audioausgabeelemente, zu steuern bzw. vorzunehmen. Dem Fahrzeuginsassen kann sonach über die in diesem Fall und für diesen Fall erfolgende Ausgabe des Audiosignals über ein oder mehrere vor der Quermittelachse des Kraftfahrzeugs angeordnete Audioausgabeelemente akustisch wahrnehmbar vermittelt werden, dass sich ein Objekt (typischerweise bezogen auf die Fahrtrichtung des Kraftfahrzeugs) vor der Quermittelachse des Kraftfahrzeugs befindet und sich frontal auf das Kraftfahrzeug zu bewegt. Auch hier gilt, dass sich Entsprechendes gegebenenfalls auch mit einer im Vergleich niedrigeren Intensität implementieren ließe. Ebenso könnte die Ausgabe des Audiosignals umgekehrt zunächst über ein hinter der Quermittelachse des Kraftfahrzeugs und somit im Bereich des Hecks des Kraftfahrzeugs angeordnetes Audioausgabeelement, insbesondere über alle hinter der Quermittelachse angeordnete Audioausgabeelemente, erfolgen.

Die Steuereinrichtung kann, insbesondere für den Fall eines sich von dem Kraftfahrzeug weg bewegenden Objekts, eingerichtet sein, die Ausgabe eines auszugebenden Audiosignals auf Grundlage einer eine Bewegung eines sich von dem Kraftfahrzeug weg bewegenden Objekts beschreibenden Bewegungsinformation über wenigstens ein hinter einer Quermittelachse des Kraftfahrzeugs und somit im Bereich des Hecks des Kraftfahrzeugs angeordnetes Audioausgabeelement, insbesondere über alle hinter der Quermittelachse angeordnete Audioausgabeelemente, zu steuern bzw. vorzunehmen. Insbesondere kann die Steuereinrichtung eingerichtet sein, die Ausgabe eines Audiosignals auf Grundlage einer eine Bewegung eines sich von dem Kraftfahrzeug weg bewegenden Objekts beschreibenden Bewegungsinformation über wenigstens ein hinter der Quermittelachse des Kraftfahrzeugs angeordnetes Audioausgabeelement, insbesondere über alle hinter der Quermittelachse angeordnete Audioausgabeelemente, mit einer im Vergleich zu einer vordefinierbaren oder vordefinierten Referenzintensität höheren Intensität als über wenigstens ein vor der Quermittelmittelachse des Kraftfahrzeugs und somit im Bereich der Front des Kraftfahrzeugs angeordnetes Audioausgabeelement, insbesondere über alle vor der Quermittelachse des Kraftfahrzeugs angeordnete Audioausgabeelemente, zu steuern bzw. vorzunehmen. Dem Fahrzeuginsassen wird sonach über die in diesem Fall und für diesen Fall erfolgende Ausgabe des Audiosignals über ein oder mehrere hinter der Quermittelachse des Kraftfahrzeugs angeordnete Audioausgabeelemente akustisch wahrnehmbar vermittelt, dass sich ein Objekt (typischerweise bezogen auf die Fahrtrichtung des Kraftfahrzeugs) hinter der Quermittelachse des Kraftfahrzeugs befindet und sich von dem Kraftfahrzeug weg bewegt. Auch hier gilt, dass sich Entsprechendes gegebenenfalls auch mit einer im Vergleich niedrigeren Intensität implementieren ließe. Ebenso könnte die Ausgabe des Audiosignals umgekehrt zunächst über ein vor der Quermittelachse des Kraftfahrzeugs und somit im Bereich der Front des Kraftfahrzeugs angeordnetes Audioausgabeelement, insbesondere über alle vor der Quermittelachse angeordnete Audioausgabeelemente, erfolgen.

Die Steuereinrichtung kann, insbesondere für den Fall eines sich (bezogen auf die Fahrtrichtung des Kraftfahrzeugs) von links auf das Kraftfahrzeug zu bewegen Objekts, eingerichtet sein, die Ausgabe eines auszugebenden Audiosignals auf Grundlage einer eine Bewegung eines sich in Fahrtrichtung von links auf das Kraftfahrzeug zu bewegenden Objekts beschreibenden Bewegungsinformation derart zu steuern, dass das Audiosignal zunächst, insbesondere vor Passieren des Kraftfahrzeugs, nur über wenigstens ein in Fahrtrichtung vor der Quermittelachse und links der Längsmittelachse des Kraftfahrzeugs angeordnetes Audioausgabeelement, insbesondere über alle in Fahrtrichtung vor der Quermittelachse und links der Längsmittelachse des Kraftfahrzeugs angeordnete Audioausgabeelemente, sodann, insbesondere bei Passieren des Kraftfahrzeugs, über wenigstens ein vor der Quermittelachse und wenigstens ein hinter der Quermittelachse und links der Längsmittelachse des Kraftfahrzeugs angeordnetes Audioausgabeelement, insbesondere über alle vor und hinter der Quermittelachse und links der Längsmittelachse des Kraftfahrzeugs angeordnete Audioausgabeelemente, und schließlich, insbesondere nach Passieren des Kraftfahrzeugs, nur über wenigstens ein in Fahrtrichtung hinter der Quermittelachse und links der Längsmittelachse des Kraftfahrzeugs angeordnetes Audioausgabeelement, insbesondere über alle in Fahrtrichtung hinter der Quermittelachse und links der Längsmittelachse des Kraftfahrzeugs angeordnete Audioausgabeelemente, ausgebbar oder ausgegeben ist. Durch die die Bewegung des Objekts relativ zu dem Kraftfahrzeug, d. h. insbesondere das linksseitige Passieren des Kraftfahrzeugs durch das Objekt, abbildende veränderliche Ausgabe des Audiosignals kann dem Fahrzeuginsassen akustisch wahrnehmbar vermittelt werden, dass sich ein Objekt von links auf das Kraftfahrzeug zu bewegt, das Kraftfahrzeug links passiert, und sich von dem Kraftfahrzeug weg bewegt. Ebenso könnte die Ausgabe des Audiosignals umgekehrt zunächst über ein hinter der Quermittelachse des Kraftfahrzeugs und somit im Bereich des Hecks des Kraftfahrzeugs angeordnetes Audioausgabeelement, insbesondere über alle hinter der Quermittelachse angeordnete Audioausgabeelemente, erfolgen.

Die Steuereinrichtung kann in analoger Weise, insbesondere für den Fall eines sich (bezogen auf die Fahrtrichtung des Kraftfahrzeugs) von rechts auf das Kraftfahrzeug zu bewegenden Objekts, eingerichtet sein, die Ausgabe eines auszugebenden Audiosignals auf Grundlage einer eine Bewegung eines sich in Fahrtrichtung von rechts auf das Kraftfahrzeug zu bewegenden Objekts beschreibenden Bewegungsinformation derart zu steuern, dass das Audiosignal zunächst, insbesondere vor Passieren des Kraftfahrzeugs, nur über wenigstens ein in Fahrtrichtung vor der Quermittelachse und rechts der Längsmittelachse des Kraftfahrzeugs angeordnetes Audioausgabeelement, insbesondere über alle in Fahrtrichtung vor der Quermittelachse und rechts der Längsmittelachse des Kraftfahrzeugs angeordnete Audioausgabeelemente, sodann, insbesondere bei Passieren des Kraftfahrzeugs, über wenigstens ein vor der Quermittelachse und wenigstens ein hinter der Quermittelachse und rechts der Längsmittelachse des Kraftfahrzeugs angeordnetes Audioausgabeelement, insbesondere über alle vor und hinter der Quermittelachse und rechts der Längsmittelachse des Kraftfahrzeugs angeordnete Audioausgabeelemente, und schließlich, insbesondere nach Passieren des Kraftfahrzeugs, nur über wenigstens ein in Fahrtrichtung hinter der Quermittelachse und rechts der Längsmittelachse des Kraftfahrzeugs angeordnetes Audioausgabeelement, insbesondere über alle in Fahrtrichtung hinter der Quermittelachse und rechts der Längsmittelachse des Kraftfahrzeugs angeordnete Audioausgabeelemente, ausgebbar oder ausgegeben ist. Durch die die Bewegung des Objekts relativ zu dem Kraftfahrzeug, d. h. insbesondere das rechtsseitige Passieren des Kraftfahrzeugs durch das Objekt, abbildende veränderliche Ausgabe des Audiosignals kann dem Fahrzeuginsassen akustisch wahrnehmbar vermittelt werden, dass sich ein Objekt von rechts auf das Kraftfahrzeug zu bewegt, das Kraftfahrzeug rechts passiert, und sich von dem Kraftfahrzeug weg bewegt. Ebenso könnte die Ausgabe des Audiosignals umgekehrt zunächst über ein vor der Quermittelachse des Kraftfahrzeugs und somit im Bereich der Front des Kraftfahrzeugs angeordnetes Audioausgabeelement, insbesondere über alle vor der Quermittelachse angeordnete Audioausgabeelemente, erfolgen.

Anhand der vorstehend erläuterten beispielhaften Steuerung der Ausgabe eines Audiosignals ergibt sich, dass einzelne, mehrere oder sämtliche Steuerungsmöglichkeiten der Ausgabe eines Audiosignals beliebig miteinander kombinierbar sind.

Die Steuereinrichtung kann auch eingerichtet sein, linke sowie rechte Überholvorgänge des eigenen Kraftfahrzeugs, d. h. Situationen, in welchen das eigene Kraftfahrzeug ein Objekt überholt, durch eine gezielte Steuerung der Ausgabe bzw. der Ausgaberichtung eines auszugebenden Audiosignals für einen Fahrzeuginsassen akustisch wahrnehmbar abzubilden.

Die Steuereinrichtung kann sonach, insbesondere für einen linken Überholvorgang des Kraftfahrzeugs, eingerichtet sein, die Ausgabe eines Audiosignals auf Grundlage einer eine Bewegung eines von dem Kraftfahrzeug links zu überholenden bzw. überholten Objekt derart zu steuern, dass das Audiosignal zunächst, insbesondere vor Passieren des links zu überholenden Objekts, nur über wenigstens ein in Fahrtrichtung vor der Quermittelachse und links der Längsmittelachse des Kraftfahrzeugs angeordnetes Audioausgabeelement, insbesondere über alle in Fahrtrichtung vor der Quermittelachse und links der Längsmittelachse des Kraftfahrzeugs angeordnete Audioausgabeelemente, sodann, insbesondere bei Passieren des zu überholenden Objekts, über wenigstens ein vor und wenigstens ein hinter der Quermittelachse und links der Längsmittelachse des Kraftfahrzeugs angeordnetes Audioausgabeelement, insbesondere über alle vor und hinter der Quermittelachse und links der Längsmittelachse des Kraftfahrzeugs angeordnete Audioausgabeelemente, und schließlich, insbesondere nach Passieren des zu überholenden Objekts, nur über wenigstens ein in Fahrtrichtung hinter der Quermittelachse und links der Längsmittelachse des Kraftfahrzeugs angeordnetes Audioausgabeelement, insbesondere über alle in Fahrtrichtung hinter der Quermittelachse und links der Längsmittelachse des Kraftfahrzeugs angeordnete Audioausgabeelemente, auszugeben. Ebenso könnte die Ausgabe des Audiosignals umgekehrt zunächst über ein hinter der Quermittelachse des Kraftfahrzeugs angeordnetes Audioausgabeelement, insbesondere über alle hinter der Quermittelachse angeordnete Audioausgabeelemente, und zuletzt über ein vor der Quermittelachse angeordnetes Audioausgabeelement, insbesondere über alle vor der Quermittelachse angeordnete Audioausgabeelemente, erfolgen.

Die Steuereinrichtung kann sonach in analoger Weise, insbesondere für einen rechten Überholvorgang des Kraftfahrzeugs, eingerichtet sein, die Ausgabe eines Audiosignals auf Grundlage einer eine Bewegung eines von dem Kraftfahrzeug rechts zu überholenden bzw. überholten Objekt derart zu steuern, dass das Audiosignal zunächst, insbesondere vor Passieren des rechts zu überholenden Objekts, nur über wenigstens ein in Fahrtrichtung vor der Quermittelachse und rechts der Längsmittelachse des Kraftfahrzeugs angeordnetes Audioausgabeelement, insbesondere übe alle in Fahrtrichtung vor der Quermittelachse und rechts der Längsmittelachse des Kraftfahrzeugs angeordnete Audioausgabeelemente, sodann, insbesondere bei Passieren des zu überholenden Objekts, über wenigstens ein vor und wenigstens ein hinter der Quermittelachse und rechts der Längsmittelachse des Kraftfahrzeugs angeordnetes Audioausgabeelement, insbesondere über alle vor und hinter der Quermittelachse und rechts der Längsmittelachse des Kraftfahrzeugs angeordnete Audioausgabeelemente, und schließlich, insbesondere nach Passieren des zu überholenden Objekts, nur über wenigstens ein in Fahrtrichtung hinter der Quermittelachse und rechts der Längsmittelachse des Kraftfahrzeugs angeordnetes Audioausgabeelement, insbesondere über alle in Fahrtrichtung hinter der Quermittelachse und rechts der Längsmittelachse des Kraftfahrzeugs angeordnete Audioausgabeelemente, auszugeben. Ebenso könnte die Ausgabe des Audiosignals umgekehrt zunächst über ein hinter der Quermittelachse des Kraftfahrzeugs angeordnetes Audioausgabeelement, insbesondere über alle hinter der Quermittelachse angeordnete Audioausgabeelemente, und zuletzt über ein vor der Quermittelachse angeordnetes Audioausgabeelement, insbesondere über alle vor der Quermittelachse angeordnete Audioausgabeelemente, erfolgen.

Grundsätzlich, d. h. auch für alle beschriebenen Beispiele gilt, dass die Steuereinrichtung eingerichtet sein kann, eine im Rahmen der Steuerung der Ausgabe eines Audiosignals erfolgende bzw. vorgenommene Änderung der Ausgabe eines Audiosignals von einer Ausgabe des Audiosignals über wenigstens ein erstes Audioausgabeelement auf eine Ausgabe des Audiosignals über wenigstens ein zweites Audioausgabeelement stufenlos durchzuführen. Die Änderung der Ausgabe des Audiosignals kann sonach insbesondere durch so genanntes Faden, d. h. eine kontinuierliche Intensitätsänderung, d. h. z. B. eine Intensitätsanhebung oderreduzierung, von einem ersten Intensitätswert auf einen zweiten Intensitätswert, erfolgen bzw. vorgenommen werden. Derart kann die Dynamik der durch die Änderung der Ausgabe des Audiosignals abgebildete Dynamik der aktuellen Objektsituation für einen Fahrzeuginsassen noch deutlich akustischer wahrnehmbar abgebildet werden.

Es können Objekt- bzw. Verkehrssituationen entstehen, in welchen sich sowohl links als auch rechts des Kraftfahrzeugs befindliche Objekte auf das Kraftfahrzeug zu oder von diesem weg bewegen. Die Steuereinrichtung kann, insbesondere für solche Fälle, eingerichtet sein, die Ausgabe eines auszugebenden Audiosignals auf Grundlage einer eine Bewegung eines sich in Fahrtrichtung von links auf das Kraftfahrzeug zu oder von diesem weg bewegenden Objekts und eines sich in von rechts auf das Kraftfahrzeug zu oder von diesem weg bewegenden Objekts derart zu steuern, dass die Ausgabe von Audiosignalen priorisiert über links oder rechts der Längsmittelachse des Kraftfahrzeugs erfolgt. Die Priorisierung kann z. B. auf Grundlage eine Klassifizierung der Objekte erfolgen. Hierzu kann das Kraftfahrzeug eine hardware- und/oder softwaremäßig implementierte Klassifizierungseinrichtung umfassen, welche einen Bestandteil der Steuereinrichtung bilden kann. Die Klassifizierung kann auf Grundlage erfasster Objektparameter, wie z. B. Art, Größe, Geschwindigkeit, Beschleunigung, etc. des Objekts erfolgen. Denkbar ist es auch, dass die Klassifizierung verkehrsrechtliche Rahmenbedingungen, wie z. B. Links- oder Rechtsverkehr, berücksichtigt.

Die Bewegungsinformation kann eine Beschleunigung oder Geschwindigkeit bzw. eine damit zusammenhängende Bewegungsgröße eines sich relativ zu dem Kraftfahrzeug bewegenden Objekts beschreiben. In diesem Fall kann die Steuereinrichtung eingerichtet sein, die Ausgabe eines Audiosignals in die Fahrgastzelle des Kraftfahrzeugs auf Grundlage einer durch die Bewegungsinformation beschriebenen Beschleunigung oder Geschwindigkeit oder eine damit zusammenhängenden Bewegungsgröße zu steuern, insbesondere derart, dass im Hinblick auf eine vordefinierbare oder vordefinierte Referenzbeschleunigung oder -geschwindigkeit höhere Beschleunigungen oder Geschwindigkeiten eines sich relativ zu dem Kraftfahrzeug bewegenden Objekts mit einer Ausgabe von Audiosignalen mit einer im Vergleich zu einer vordefinierbaren oder vordefinierten Referenzintensität höheren Intensität ausgegeben werden. Derart können auch Beschleunigungen, Geschwindigkeiten sowie damit zusammenhängende Bewegungsgrößen von erfassten Objekten für einen Fahrzeuginsassen akustisch wahrnehmbar abgebildet werden. Gleiches gilt für veränderliche Beschleunigungen, Geschwindigkeiten sowie damit zusammenhängende Bewegungsgrößen von erfassten Objekten.

Die Erfindung betrifft neben dem Kraftfahrzeug auch eine Vorrichtung zur Ausgabe wenigstens eines Audiosignals in eine Fahrgastzelle des hierin beschriebenen Kraftfahrzeugs. Die Vorrichtung umfasst eine mehrere in einer Fahrgastzelle eines Kraftfahrzeugs anordenbare oder angeordnete Audioausgabeelemente umfassende Audioausgabeeinrichtung zur Ausgabe wenigstens eines Audiosignals in eine Fahrgastzelle eines Kraftfahrzeugs, eine der Audioausgabeeinrichtung zuordenbare oder zugeordnete Steuereinrichtung zur Steuerung der Ausgabe wenigstens eines Audiosignals über jeweilige Audioausgabeelemente, insbesondere zur Steuerung wenigstens eines Ausgabeparameters des über jeweilige Audioausgabeelemente ausgebbaren wenigstens einen Audiosignals. Die Steuereinrichtung ist eingerichtet, die Ausgabe des wenigstens einen Audiosignals, insbesondere in eine Fahrgastzelle eines mit der Vorrichtung ausgestatteten Kraftfahrzeugs, auf Grundlage einer eine Bewegung wenigstens eines Objekts, insbesondere eines Verkehrsteilnehmers, relativ zu einem mit der Vorrichtung ausgestatteten Kraftfahrzeug beschreibenden Bewegungsinformation zu steuern.

Überdies betrifft die Erfindung ein Verfahren nach Anspruch 15 zur Ausgabe wenigstens eines Audiosignals in eine Fahrgastzelle des hierin beschriebenen Kraftfahrzeugs. Verfahrensgemäß erfolgt eine Steuerung der Ausgabe des wenigstens einen Audiosignals in die Fahrgastzelle auf Grundlage einer eine Bewegung wenigstens eines Objekts, insbesondere eines Verkehrsteilnehmers, relativ zu einem mit der Vorrichtung ausgestatteten Kraftfahrzeug beschreibenden Bewegungsinformation.

Sämtliche Ausführungen im Zusammenhang mit dem Kraftfahrzeug, d. h. insbesondere auch die die Gegenstände der abhängigen Ansprüche betreffenden Ausführungen gelten analog für die Vorrichtung sowie für das Verfahren.

Die Erfindung wird im Folgenden im Zusammenhang mit den in den Zeichnungen dargestellten Ausführungsbeispielen näher erläutert. Dabei zeigt:
- Fig. 1: eine Prinzipdarstellung eines Kraftfahrzeugs gemäß einem Ausführungsbeispiel;
- Fig. 2 - 5: jeweils eine Prinzipdarstellung einer Objektsituation im Umfeld um das in Fig. 1 gezeigte Kraftfahrzeug; und
- Fig. 6: eine Prinzipdarstellung eines Kraftfahrzeugs gemäß einem weiteren Ausführungsbeispiel.

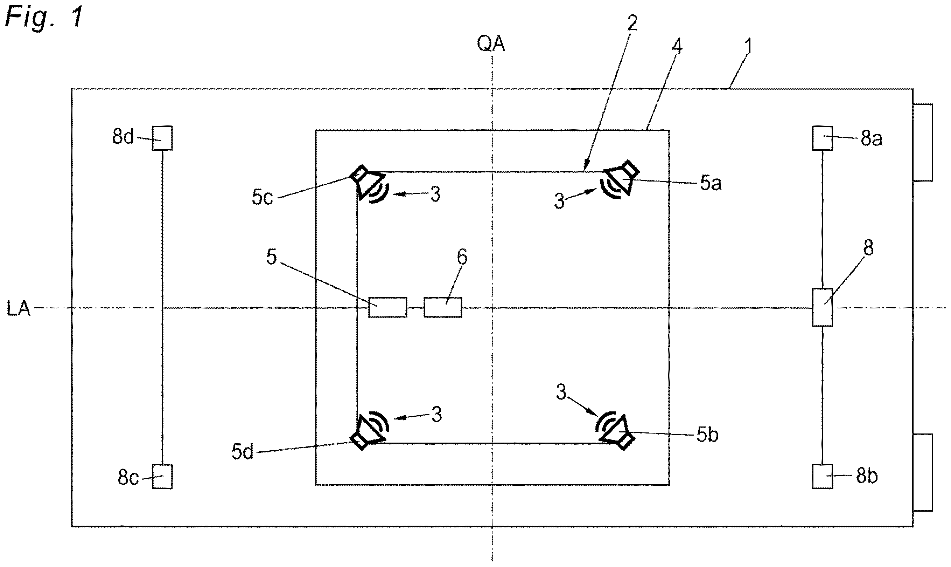

Fig. 1 zeigt eine Prinzipdarstellung eines Kraftfahrzeugs 1 gemäß einem ersten Ausführungsbeispiel in einer Aufsicht.

Das Kraftfahrzeug 1 umfasst eine Vorrichtung 2 zur Ausgabe eines oder mehrerer Audiosignale 3 in die Fahrgastzelle 4 des Kraftfahrzeugs 1. Die Vorrichtung 2 kann einen funktionellen Bestandteil einer kraftfahrzeugseitigen Multimediaeinrichtung (nicht gezeigt) zur Ausgabe von Multimediasignalen bzw. -inhalten in die Fahrgastzelle 4 bilden. Vermittels der Vorrichtung 2 lassen sich insbesondere Musik- und/oder Sprachsignale ausgeben; unter Audiosignalen 3 sind damit Musik- und/oder Sprachsignale zu verstehen; die Audiosignale 3 beinhalten sonach Musik und/oder Sprache.

Die Vorrichtung 2 umfasst eine Audioausgabeeinrichtung 5 zur Ausgabe eines oder mehrerer Audiosignale 3 in die Fahrgastzelle 4 des Kraftfahrzeugs 1. Die hardware- und/oder softwaremäßig implementierte Audioausgabeeinrichtung 5 ist zur Verarbeitung wenigstens eines über eine körperliche oder nicht-körperliche Audiosignalquelle (nicht gezeigten) bereitgestellten Audiosignals 3 zur Ausgabe des Audiosignals 3 in die Fahrgastzelle 4 eingerichtet. Die Audioausgabeeinrichtung 5 umfasst mehrere in der Fahrgastzelle 4 angeordnete Audioausgabeelemente 5a - 5d. Die Audioausgabeelemente 5a - 5d sind in unterschiedlichen Bereichen der Fahrgastzelle 4 angeordnet, um das Audiosignal 3 aus unterschiedlichen Bereichen der Fahrgastzelle 4 in die Fahrgastzelle 4 auszugeben. Die Audioausgabeelemente 5a - 5d sind jeweils als ein wenigstens einen Lautsprecher umfassendes Lautsprecherelement ausgebildet.

In dem Ausführungsbeispiel gemäß Fig. 1 sind rein exemplarisch vier Audioausgabeelemente 5a - 5d gezeigt. Zwei Audioausgabeelemente 5a, 5b sind vor der Quermittelachse QA des Kraftfahrzeugs 1, d. h. im Bereich der Front des Kraftfahrzeugs 1, angeordnet, wobei das Audioausgabeelement 5a links der Längsmittelachse LA des Kraftfahrzeugs 1 und das Audioausgabeelement 5b rechts der Längsmittelachse LA des Kraftfahrzeugs 1 angeordnet ist. Zwei weitere Audioausgabeelemente 5c, 5d sind hinter der Quermittelachse QA des Kraftfahrzeugs 1, d. h. im Bereich des Hecks des Kraftfahrzeugs 1, angeordnet, wobei das Audioausgabeelement 5c links der Längsmittelachse LA des Kraftfahrzeugs 1 und das Audioausgabeelement 5d rechts der Längsmittelachse LA des Kraftfahrzeugs 1 angeordnet ist. Selbstverständlich könnten weitere Audioausgabeelemente z. B. auch im Bereich der Längsmittelachse LA und/oder im Bereich der Quermittelachse QA des Kraftfahrzeugs 1 angeordnet sein.

Der Betrieb der Audioausgabeelemente 5a - 5d kann abhängig oder unabhängig voneinander gesteuert werden. Die Audioausgabeelemente 5a - 5d können sonach abhängig oder unabhängig voneinander in oder außer Betrieb genommen werden. Ferner können die Audioausgabeelemente 5a - 5d abhängig oder unabhängig voneinander mit gleichen oder unterschiedlichen Audioausgabeparametern, wie z. B. Intensität, abhängig oder unabhängig voneinander betrieben werden.

Die Vorrichtung 2 umfasst weiterhin eine der Audioausgabeeinrichtung 5 zuordenbare oder zugeordnete hardware- und/oder softwaremäßig implementierte Steuereinrichtung 6. Die Steuereinrichtung 6 ist zur Steuerung der Ausgabe des Audiosignals 3 über jeweilige Audioausgabeelemente 5a - 5d eingerichtet. Insbesondere ist die Steuereinrichtung 6 zur Steuerung wenigstens eines Audioausgabeparameters, d. h. z. B. der Intensität, des über jeweilige Audioausgabeelemente 5a - 5d ausgebbaren Audiosignals 3 eingerichtet.

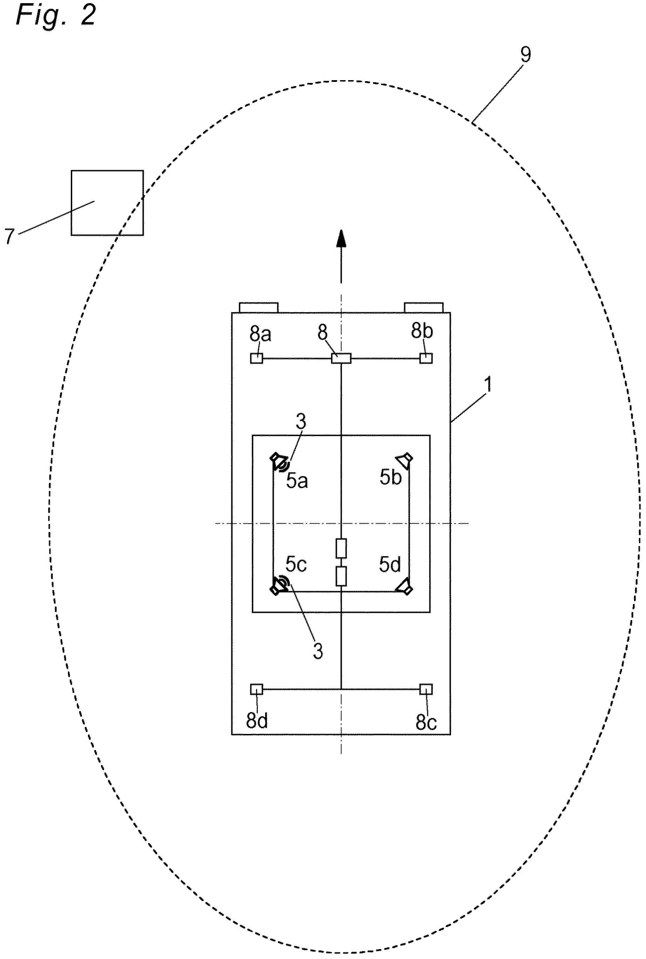

Die Steuereinrichtung 6 ist eingerichtet, die Ausgabe des Audiosignals 3 in die Fahrgastzelle 4 auf Grundlage einer eine Bewegung wenigstens eines Objekts 7 (vgl. Fig. 2 - 5), d. h. insbesondere eines weiteren Verkehrsteilnehmers, wie z. B. eines weiteren Kraftfahrzeugs, relativ zu dem Kraftfahrzeug 1 beschreibenden Bewegungsinformation zu steuern. Die Ausgabe des Audiosignals 3 in die Fahrgastzelle 4, d. h. die Ausgaberichtung des Audiosignals 3 - hierunter ist im Besonderen die von einem in der Fahrgastzelle 4 befindlichen Fahrzeuginsassen akustisch empfundene bzw. wahrgenommene Ausgaberichtung des in die Fahrgastzelle 4 ausgegebenen Audiosignals 3 zu verstehen - lässt sich sonach auf Grundlage der eine Bewegung eines im Umfeld um das Kraftfahrzeug 1 befindlichen Objekts 7 relativ zu dem Kraftfahrzeug 1 beschreibenden Bewegungsinformation steuern. Die Steuereinrichtung 6 ist sonach eingerichtet, Steuerungsparameter zur Steuerung der Ausgabe des in die Fahrgastzelle 4 auszugebenden Audiosignals 3 zu erzeugen, welche einem Fahrzeuginsassen einen akustisch wahrnehmbaren Zusammenhang zwischen einem im Umfeld um das Kraftfahrzeug 1 befindlichen, sich relativ zu dem Kraftfahrzeug 1 bewegenden Objekt 7 respektive der Bewegung des sich im Umfeld um das Kraftfahrzeug 1 befindlichen Objekts 7 relativ zu dem Kraftfahrzeug 1 und dem eigenen Kraftfahrzeug 1 vermittelt, und die Ausgabe des Audiosignals 3 auf Grundlage der Steuerungsparameter durchzuführen. Die Ausgabe des Audiosignals 3 bildet sonach etwaige sich im Umfeld um das Kraftfahrzeug 1 befindliche und sich relativ zu dem Kraftfahrzeug 1 bewegende Objekte 7 ab. Einem Fahrzeuginsassen wird sonach über die besondere Steuerung der Ausgabe des Audiosignals 3 der erwähnte akustisch wahrnehmbare Zusammenhang zwischen im Umfeld um das Kraftfahrzeug 1 befindlichen, sich relativ zu dem Kraftfahrzeug 1 bewegenden Objekten 7 respektive entsprechender Objekte 7 relativ zu dem Kraftfahrzeug 1 und dem Kraftfahrzeug 1 vermittelt. Dies erfolgt unabhängig von dem eigentlichen Inhalt des Audiosignals 3 allein über die Steuerung der Ausgabe bzw. der Ausgaberichtung des Audiosignals 3; der eigentliche Inhalt des Audiosignals 3 wird nicht verändert.

Die Steuerung der Ausgabe des Audiosignals 3, d. h. insbesondere die Steuerung der Ausgaberichtung des Audiosignals 3, vermittelt einem Fahrzeuginsassen sonach im Sinne eines akustisch wahrnehmbaren Feedbacks, dass sich ein im Umfeld um das Kraftfahrzeug 1 befindliches Objekt 7 relativ zu dem Kraftfahrzeug 1 bewegt. Mithin wird die Steuerung des Audiosignals 3 neben dem eigentlichen Zweck der Wiedergabe jeweiliger durch das Audiosignal 3 abgebildeter Audioinhalte, welche auch während der Steuerung der Ausgabe des Audiosignals 3 gegeben ist, durch gezielte Steuerung der Ausgaberichtung sonach auch dazu genutzt, um einem Fahrzeuginsassen, d. h. insbesondere dem Fahrer, eine möglichst gute Information über sich im Umfeld um das Kraftfahrzeug 1 befindliche, relativ zu dem Kraftfahrzeug 1 bewegende Objekte 7 zu vermitteln.

Insbesondere können, z. B. aufgrund einer bestimmten Relativposition zu dem Kraftfahrzeug 1, für einen Fahrzeuginsassen nicht sichtbare Objekte 7 durch entsprechende Steuerung der Ausgabe des Audiosignals 3 für den Fahrzeuginsassen akustisch wahrnehmbar werden, sodass der Fahrzeuginsasse durch eine vermittels der Steuereinrichtung 6 erfolgende gezielte Steuerung der Ausgabe bzw. der Ausgaberichtung des Audiosignals 3 auf nicht sichtbare Objekte 7 im Umfeld um das Kraftfahrzeug 1 hingewiesen wird. Die Steuerung kann eine gezielte Veränderung der Ausgabe der Audiosignale bzw. der Ausgaberichtung des Audiosignals 3 erfolgen, anhand welcher ein Fahrzeuginsasse auf ein nicht sichtbares Objekt 7 im Umfeld um das Kraftfahrzeug 1 hingewiesen werden kann.

Dem Fahrzeuginsassen können über die auf Grundlage der Objektsituation im Umfeld um das Kraftfahrzeug 1 dynamisch bzw. variabel steuerbare bzw. gesteuerte Ausgabe des Audiosignals 3 sonach fahrsicherheitsrelevante Aspekte über die Objektsituation im Umfeld um das Kraftfahrzeug 1 vermittelt werden.

Der Steuereinrichtung 6 ist eine kraftfahrzeugseitige hardware- und/oder softwaremäßig implementierte Erfassungseinrichtung 8 zugeordnet, welche zur Erfassung einer Bewegung eines Objekts 7 relativ zu dem Kraftfahrzeug 1 und zur Erzeugung der bzw. einer eine Bewegung eines erfassten Objekts 7 relativ zu dem Kraftfahrzeug 1 beschreibenden Bewegungsinformation eingerichtet ist. Die Erfassungseinrichtung 8 ist insbesondere zur Erfassung von sich in gleicher oder entgegengesetzter Richtung wie das Kraftfahrzeug 1 bewegender Objekten 7 eingerichtet. Die Erfassungseinrichtung 8 kann auch zur Abstands- bzw. Geschwindigkeitsmessung eingerichtet sein. Die Erfassungseinrichtung 8 kann einen Bestandteil eines kraftfahrzeugseitigen Assistenz- oder Sicherheitssystems, d. h. z. B. eines Längs- und/oder Querführungssystems, Parksystems, etc., bilden. Insbesondere kann die Erfassungseinrichtung 8 einen Bestandteil eines einen teil- oder vollautonomen Fahrbetrieb des Kraftfahrzeugs 1 ermöglichenden Assistenzsystems bilden. Ein entsprechendes Assistenz- oder Sicherheitssystem kann über geeignete, z. B. akustische und/oder optische, Erfassungselemente 8a - 8d, d. h. z. B. akustisch und/oder optische Sensorelemente, verfügen, welche zur Erfassung von Objekten im Umfeld um das Kraftfahrzeug 1 respektive zur Erfassung der Bewegung von Objekten 7 im Umfeld um das Kraftfahrzeug 1 eingerichtet sind. Entsprechende Erfassungselemente 8a - 8d können z. B. als Ultraschallelemente, Laserelemente, Lidarelemente, Radarelemente, etc. ausgebildet sein.

Die Erfassungseinrichtung 8 ist sonach zur Erzeugung eines das Kraftfahrzeug 1 umgebenden Erfassungsbereichs 9 (vgl. Fig. 2 - 5), in welchem eine Bewegung eines Objekts 7 relativ zu dem Kraftfahrzeug 1 erfassbar ist, eingerichtet. Die Erfassungseinrichtung 8 kann zur Erfassung des Eintritts bzw. der Eintrittsposition sowie des Austritts bzw. der Austrittsposition entsprechender Objekte 7 in den bzw. aus dem Erfassungsbereich 9 eingerichtet sein. Selbstverständlich können auch Bewegungen eines in den Erfassungsbereich 9 eingetretenen Objekts 7 innerhalb des Erfassungsbereichs 9 erfasst werden. Der Erfassungsbereich 9, d. h. insbesondere dessen Ausrichtung, Form und Größe, richtet sich nach der Art, Anordnung und Betriebsweise der Erfassungselemente 8a - 8d, von welchen in dem in Fig. 1 gezeigten Ausführungsbeispiel rein exemplarisch vier gezeigt sind.

Nachfolgend werden im Zusammenhang mit den in den Fig. 2 - 5 gezeigten Ausführungsbeispielen, welche jeweils eine Prinzipdarstellung einer beispielhaften Objektsituation im Umfeld um das Kraftfahrzeug 1 zeigen, beispielhafte durch entsprechende Bewegungsinformationen beschriebene Objektsituationen um das Kraftfahrzeug 1 sowie Möglichkeiten einer vermittels der Steuereinrichtung 6 vornehmbaren bzw. vorgenommenen Steuerung der Ausgabe bzw. der Ausgaberichtung eines Audiosignals 3 in die Fahrgastzelle 4 des Kraftfahrzeugs 1 erläutert:
Anhand des Ausführungsbeispiels gemäß Fig. 2 ist ersichtlich, dass die Steuereinrichtung 6 für den Fall eines sich links des Kraftfahrzeugs 1 bewegenden Objekts 7 z. B. eingerichtet ist, die Ausgabe eines auszugebenden Audiosignals 3 auf Grundlage einer eine Bewegung des sich links des Kraftfahrzeugs 1 bewegenden Objekts 7 beschreibenden Bewegungsinformation über links der Längsmittelachse LA des Kraftfahrzeugs 1 angeordnete Audioausgabeelemente 5a, 5c zu steuern bzw. vorzunehmen. Die Steuereinrichtung 6 kann dabei eingerichtet sein, die Ausgabe des Audiosignals 3 über links der Längsmittelachse LA des Kraftfahrzeugs 1 angeordnete Audioausgabeelemente 5a, 5c mit einer im Vergleich höheren Intensität als über rechts der Längsmittelachse LA des Kraftfahrzeugs 1 angeordnete Audioausgabeelemente 5b, 5d zu steuern bzw. vorzunehmen. Dem Fahrzeuginsassen kann sonach akustisch wahrnehmbar vermittelt werden, dass sich ein Objekt 7 bezogen auf die in den Fig. 2 - 5 durch den Pfeil angedeutete Fahrtrichtung des Kraftfahrzeugs 1 links des Kraftfahrzeugs 1 befindet und sich relativ zu dem Kraftfahrzeug 7 bewegt. Entsprechendes ließe sich auch mit einer im Vergleich niedrigeren Intensität implementieren.

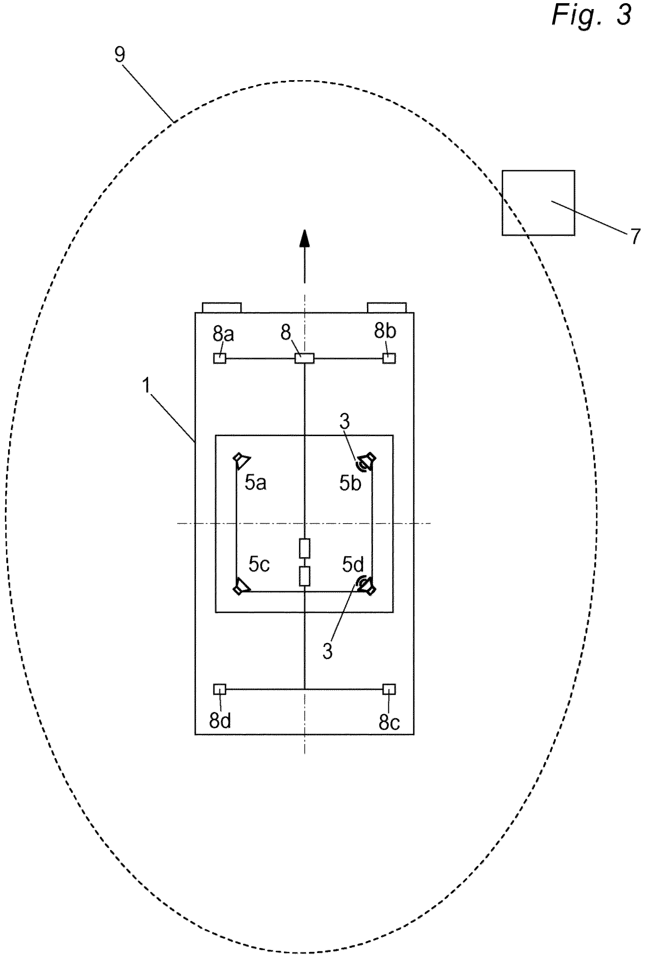

Anhand des Ausführungsbeispiels gemäß Fig. 3 ist ersichtlich, dass die Steuereinrichtung 6 für den Fall eines sich rechts des Kraftfahrzeugs 1 bewegenden Objekts 7 z. B. eingerichtet ist, die Ausgabe eines auszugebenden Audiosignals 3 auf Grundlage einer eine Bewegung des sich rechts des Kraftfahrzeugs 1 bewegenden Objekts 7 beschreibenden Bewegungsinformation über rechts der Längsmittelachse LA des Kraftfahrzeugs 1 angeordnete Audioausgabeelemente 5a, 5c zu steuern bzw. vorzunehmen. Die Steuereinrichtung 6 kann dabei eingerichtet sein, die Ausgabe des Audiosignals 3 über rechts der Längsmittelachse LA des Kraftfahrzeugs 1 angeordnete Audioausgabeelemente 5b, 5d mit einer im Vergleich höheren Intensität als über links der Längsmittelachse LA des Kraftfahrzeugs 1 angeordnete Audioausgabeelemente 5a, 5c zu steuern bzw. vorzunehmen. Dem Fahrzeuginsassen kann sonach akustisch wahrnehmbar vermittelt werden, dass sich ein Objekt 7 bezogen auf die durch den Pfeil angedeutete Fahrtrichtung des Kraftfahrzeugs 1 rechts des Kraftfahrzeugs 1 befindet und sich relativ zu dem Kraftfahrzeug 1 bewegt. Entsprechendes ließe sich auch mit einer im Vergleich niedrigeren Intensität implementieren.

Für die Ausführungsbeispiele gemäß den Fig. 2, 3 gilt weiter, dass die Ausgabe des Audiosignals 3 auf Grundlage einer eine Bewegung eines sich frontal auf das Kraftfahrzeug 1 zu bewegenden Objekts 7 beschreibenden Bewegungsinformation über die vor der Quermittelachse QA des Kraftfahrzeugs 1 und somit im Bereich der Front des Kraftfahrzeugs 1 angeordneten Audioausgabeelemente 5a, 5b erfolgen kann. Die Steuereinrichtung 6 kann eingerichtet sein, die Ausgabe des Audiosignals 3 über die vor der Quermittelachse QA des Kraftfahrzeugs 1 angeordneten Audioausgabeelemente 5a, 5b mit einer im Vergleich zu einer vordefinierbaren oder vordefinierten Referenzintensität höheren Intensität als über die hinter der Quermittelmittelachse QA des Kraftfahrzeugs 1 und somit im Bereich des Hecks des Kraftfahrzeugs 1 angeordneten Audioausgabeelemente 5c, 5d zu steuern bzw. vorzunehmen. Auch hier gilt, dass sich Entsprechendes gegebenenfalls auch mit einer im Vergleich niedrigeren Intensität implementieren ließe. Ebenso könnte die Ausgabe des Audiosignals 3 umgekehrt zunächst über hinter der Quermittelachse QA des Kraftfahrzeugs 1 und somit im Bereich des Hecks des Kraftfahrzeugs 1 angeordnete Audioausgabeelemente 5c, 5d erfolgen.

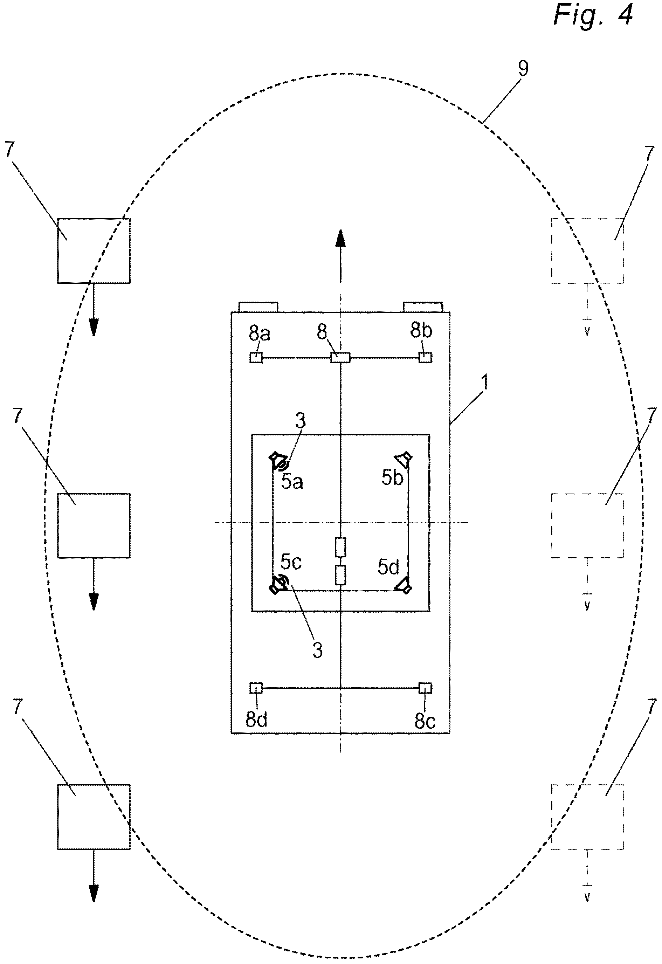

Die Steuereinrichtung 6 kann wie exemplarisch in Fig. 4 gezeigt, für den Fall eines sich bezogen auf die Fahrtrichtung des Kraftfahrzeugs 1 von links auf das Kraftfahrzeug 1 zu bewegenden Objekts 7 eingerichtet sein, die Ausgabe des Audiosignals 3 derart zu steuern, dass das Audiosignal 3 zunächst, insbesondere vor Passieren des Kraftfahrzeugs 1, nur über wenigstens ein in Fahrtrichtung vor der Quermittelachse QA und links der Längsmittelachse LA angeordnetes Audioausgabeelement 5a, sodann, insbesondere bei Passieren des Kraftfahrzeugs 1, über vor der Quermittelachse QA und wenigstens ein hinter der Quermittelachse QA und links der Längsmittelachse LA angeordnete Audioausgabeelemente 5a, 5c und schließlich, insbesondere nach Passieren des Kraftfahrzeugs 1, nur über wenigstens ein in Fahrtrichtung hinter der Quermittelachse QA und links der Längsmittelachse LA angeordnetes Audioausgabeelement 5c ausgebbar oder ausgegeben ist. Ebenso könnte die Ausgabe des Audiosignals 3 umgekehrt zunächst über ein hinter der Quermittelachse QA und somit im Bereich des Hecks des Kraftfahrzeugs 1 angeordnetes Audioausgabeelement 5d erfolgen. Analoges gilt für den in Fig. 4 strichliert dargestellten Fall eines sich bezogen auf die Fahrtrichtung des Kraftfahrzeugs 1 von rechts auf das Kraftfahrzeug 1 zu bewegenden Objekts 7.

Für den Fall eines sich von dem Kraftfahrzeug 1 weg bewegenden Objekts 7, kann die Ausgabe des Audiosignals 3 auf Grundlage einer eine Bewegung eines sich von dem Kraftfahrzeug weg bewegenden Objekts beschreibenden Bewegungsinformation über hinter einer Quermittelachse QA und somit im Bereich des Hecks des Kraftfahrzeugs 1 angeordnete Audioausgabeelemente 5c, 5d erfolgen. Die Steuereinrichtung 6 kann eingerichtet sein, die Ausgabe des Audiosignals 3 auf Grundlage einer eine Bewegung des sich von dem Kraftfahrzeug 1 weg bewegenden Objekts 7 beschreibenden Bewegungsinformation über hinter der Quermittelachse QA angeordnete Audioausgabeelemente 5c, 5d mit einer im Vergleich zu einer vordefinierbaren oder vordefinierten Referenzintensität höheren Intensität als über vor der Quermittelmittelachse QA und somit im Bereich der Front des Kraftfahrzeugs 1 angeordnete Audioausgabeelemente 5a, 5b zu steuern bzw. vorzunehmen. Auch hier gilt, dass sich Entsprechendes gegebenenfalls auch mit einer im Vergleich niedrigeren Intensität implementieren ließe. Ebenso könnte die Ausgabe des Audiosignals 3 umgekehrt zunächst über vor der Quermittelachse QA und somit im Bereich der Front des Kraftfahrzeugs 1 angeordnete Audioausgabeelemente 5a, 5b erfolgen.

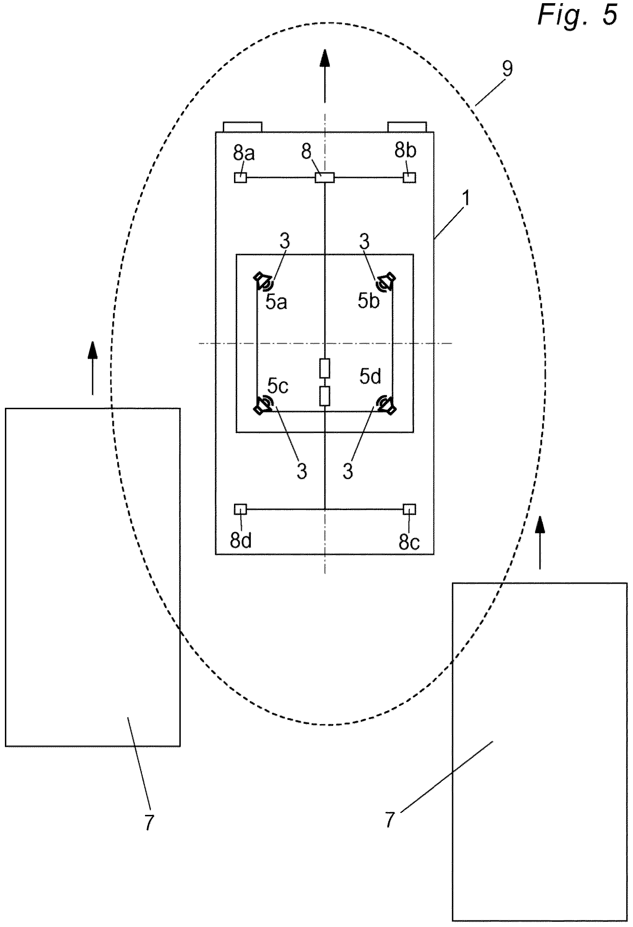

Wie im Zusammenhang mit dem Ausführungsbeispiel gemäß Fig. 5 gezeigt, kann die Steuereinrichtung 6 auch eingerichtet sein, linke sowie rechte Überholvorgänge des eigenen Kraftfahrzeugs 1, d. h. Situationen, in welchen das eigene Kraftfahrzeug 1 ein Objekt 7 überholt, durch eine gezielte Steuerung der Ausgabe bzw. der Ausgaberichtung des Audiosignals 3 für einen Fahrzeuginsassen akustisch wahrnehmbar abzubilden.

Die Steuereinrichtung 6 kann für einen linken Überholvorgang des Kraftfahrzeugs 1 eingerichtet sein, die Ausgabe des Audiosignals 3 auf Grundlage einer eine Bewegung eines von dem Kraftfahrzeug 1 links zu überholenden bzw. überholten Objekt 7 derart zu steuern, dass das Audiosignal 3 zunächst, insbesondere vor Passieren des links zu überholenden Objekts 7, nur über ein in Fahrtrichtung vor der Quermittelachse QA und links der Längsmittelachse LA angeordnetes Audioausgabeelement 5a, sodann, insbesondere bei Passieren des zu überholenden Objekts 7, über vor und ein hinter der Quermittelachse QA und links der Längsmittelachse LA angeordnete Audioausgabeelement 5a, 5c und schließlich, insbesondere nach Passieren des zu überholenden Objekts 7, nur über ein in Fahrtrichtung hinter der Quermittelachse QA und links der Längsmittelachse LA angeordnetes Audioausgabeelement 5c auszugeben. Ebenso könnte die Ausgabe des Audiosignals 3 umgekehrt zunächst über ein hinter der Quermittelachse QA angeordnetes Audioausgabeelement 5c und zuletzt über ein vor der Quermittelachse QA angeordnetes Audioausgabeelement 5a erfolgen. Analoges gilt für den in Fig. 5 strichliert dargestellten Fall eines rechts zu überholenden bzw. überholten Objekts 7.

Es können Objekt- bzw. Verkehrssituationen entstehen, in welchen sich sowohl links als auch rechts des Kraftfahrzeugs 1 befindliche Objekte 7 auf das Kraftfahrzeug 1 zu oder von diesem weg bewegen. Die Steuereinrichtung 6 kann, insbesondere für solche Fälle, eingerichtet sein, die Ausgabe des Audiosignals 3 auf Grundlage einer eine Bewegung eines sich in Fahrtrichtung des Kraftfahrzeugs 1 von links auf das Kraftfahrzeug 1 zu oder von diesem weg bewegenden Objekts 7 und eines sich in von rechts auf das Kraftfahrzeug 1 zu oder von diesem weg bewegenden Objekts 7 derart zu steuern, dass die Ausgabe des Audiosignals 3 priorisiert über links oder rechts der Längsmittelachse LA angeordnete Audioausgabeelemente 5a - 5d erfolgt.

Die Priorisierung kann z. B. auf Grundlage eine Klassifizierung der Objekte 7 erfolgen. Hierzu umfasst das Kraftfahrzeug 1 eine hardware- und/oder softwaremäßig implementierte Klassifizierungseinrichtung (nicht gezeigt), welche einen Bestandteil der Steuereinrichtung 6 bilden kann. Die Klassifizierung kann auf Grundlage erfasster Objektparameter, wie z. B. Art, Größe, Geschwindigkeit, Beschleunigung, etc. des Objekts 7 erfolgen. Denkbar ist es auch, dass die Klassifizierung verkehrsrechtliche Rahmenbedingungen, wie z. B. Links- oder Rechtsverkehr, berücksichtigt.

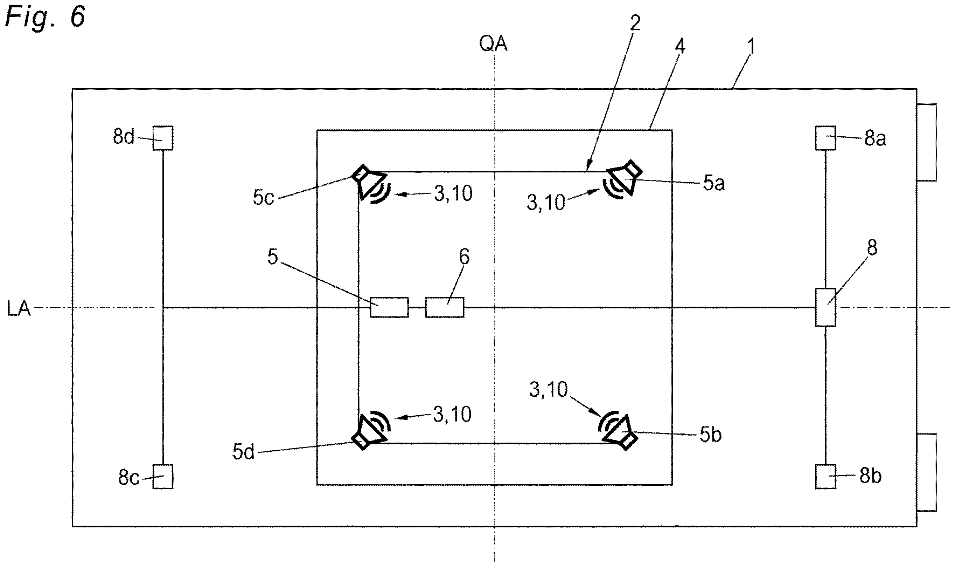

Fig. 6 zeigt eine Prinzipdarstellung eines Kraftfahrzeugs 1 gemäß einem weiteren Ausführungsbeispiel.

Anhand des Ausführungsbeispiels gemäß Fig. 6 ist zunächst ersichtlich, dass die Audioausgabeeinrichtung 5 zur, insbesondere parallelen bzw. zeitgleichen, Ausgabe wenigstens zweier unterschiedlicher Audiosignale 3, 10 in die Fahrgastzelle 4 des Kraftfahrzeugs 1 eingerichtet sein kann. Unabhängig von deren konkretem Inhalt können jeweilige erste und zweite Audiosignale 3, 10 über gleiche oder unterschiedliche Audioausgabeelemente 5a - 5d und/oder mit gleichen oder ungleichen Audioausgabeparametern ausgegeben werden.

Ein erstes Audiosignal 3 ist kann ein im Zusammenhang mit dem Ausführungsbeispiel gemäß Fig.

1 erwähntes Musik- oder Sprachsignal. Ein zweites Audiosignal 10 kann ein, insbesondere künstlich erzeugtes, Bewegungsinformationssignal sein, welches andere Audioinhalte als Musik und/oder Sprache, d. h. keine Musik und/oder Sprache, beinhaltet. Das Bewegungsinformationssignal kann, z. B. in Form eines Tons oder einer Tonfolge einer bestmimten Frequenz bzw. eines bestimmten Frequenzbereichs, eine Bewegung wenigstens eines Objekts 7, insbesondere eines anderen Verkehrsteilnehmers, relativ zu dem Kraftfahrzeug 1 andeuten bzw. beschreiben. Bei einem Bewegungsinformationssignal kann es sich sonach um ein zu einem ohnehin ausgegebenen ersten Audiosignal 3 gesondert bzw. zusätzlich erzeugtes und zusätzlich ausgegebenes Audiosignal handeln, welches dazu dient, einem Fahrzeuginsassen eine Bewegung wenigstens eines Objekts 7 relativ zu dem Kraftfahrzeug 1 anzudeuten. Ein Bewegungsinformationssignal kann sonach, insbesondere im Gegensatz zu einem Musik- und/oder Sprachsignal, (erst) dann erzeugt und/oder ausgegeben werden, wenn ein sich relativ zu dem Kraftfahrzeug 1 bewegendes Objekt 7 erfasst wurde.

Ein Bewegungsinformationssignal kann über die Steuereinrichtung 6 erzeugt werden.

Die Steuereinrichtung 6 ist ferner eingerichtet, die Ausgabe eines entsprechenden Bewegungsinformationssignals in die Fahrgastzelle 4 auf Grundlage der eine Bewegung wenigstens eines Objekts 7, insbesondere eines Verkehrsteilnehmers, relativ zu dem Kraftfahrzeug 1 beschreibenden Bewegungsinformation zu steuern. Mithin gelten die Ausführungen im Zusammenhang mit den Fig. 2 - 5 analog für die Steuerung der Ausgabe eines Bewegungsinformationssignals bzw. die Steuerung der Ausgaberichtung eines Bewegungsinformationssignals. Mithin kann auch die Ausgabe bzw. Steuerung der Ausgabe eines entsprechenden Bewegungsinformationssignals, d. h. insbesondere die Steuerung der Ausgaberichtung des Bewegungsinformationssignals, einem Fahrzeuginsassen im Sinne eines akustisch wahrnehmbaren Feedbacks vermitteln, dass sich ein im Umfeld um das Kraftfahrzeug 1 befindliches Objekt 7 relativ zu dem Kraftfahrzeug 1 bewegt.

Selbstverständlich können die Ausführungsbeispiele gemäß den Fig. 1 und 6 miteinander kombiniert werden. Mithin kann auch die Ausgabe mehrerer unterschiedlicher Audiosignale 3, 10, d. h. insbesondere eines entsprechenden Bewegungsinformationssignals sowie eines Musik- und/oder Sprachsignals, jeweils auf Grundlage der eine Bewegung wenigstens eines Objekts 7 relativ zu dem Kraftfahrzeug 1 beschreibenden Bewegungsinformation gesteuert werden.

Für alle Ausführungsbeispiele gilt, dass die Steuereinrichtung 6 eingerichtet sein kann, eine im Rahmen der Steuerung der Ausgabe des Audiosignals 3 erfolgende bzw. vorgenommene Änderung der Ausgabe des Audiosignals 3 von einer Ausgabe über wenigstens ein erstes Audioausgabeelement 5a - 5d auf eine Ausgabe über wenigstens ein zweites Audioausgabeelement 5a - 5d stufenlos durchzuführen. Die Änderung der Ausgabe des Audiosignals 3 über ein oder mehrere Audioausgabeelemente 5a - 5d kann sonach durch Faden, d. h. eine kontinuierliche Intensitätsänderung, d. h. z. B. eine Intensitätsanhebung oderreduzierung, von einem ersten Intensitätswert auf einen zweiten Intensitätswert, erfolgen bzw. vorgenommen werden.

Für alle Ausführungsbeispiele gilt ferner, dass die Bewegungsinformation eine Beschleunigung oder Geschwindigkeit bzw. eine damit zusammenhängende Bewegungsgröße eines sich relativ zu dem Kraftfahrzeug 1 bewegenden Objekts 7 beschreiben kann. Die Steuereinrichtung 6 kann eingerichtet sein, die Ausgabe des Audiosignals 3 auf Grundlage der durch die Bewegungsinformation beschriebenen Beschleunigung oder Geschwindigkeit oder einer damit zusammenhängenden Bewegungsgröße zu steuern, insbesondere derart, dass im Hinblick auf eine vordefinierbare oder vordefinierte Referenzbeschleunigung oder -geschwindigkeit höhere Beschleunigungen oder Geschwindigkeiten eines sich relativ zu dem Kraftfahrzeug 1 bewegenden Objekts 7 mit einer Ausgabe des Audiosignals 3 mit einer im Vergleich zu einer vordefinierbaren oder vordefinierten Referenzintensität höheren Intensität ausgegeben werden.

Für alle Ausführungsbeispiele gilt zudem, dass Audiosignale 3, mit einem bestimmten, insbesondere die Bewegung eines erfassten, sich relativ zu dem Kraftfahrzeug bewegenden Objekts abbildenden, Audio-Effekt ausgegeben werden können. Bei einem entsprechenden Audio-Effekt kann es sich z. B. um einen (künstlich erzeugten) Doppler-Effekt handeln. Die Audio-Effekte können ebenso seitens der Steuereinrichtung 6 erzeugt werden.

Mit den in den Fig. gezeigten Kraftfahrzeugen 1 lässt sich ein Verfahren zur Ausgabe wenigstens eines Audiosignals 3 in eine Fahrgastzelle 4 eines Kraftfahrzeugs 1 implementieren. Verfahrensgemäß erfolgt eine Steuerung der Ausgabe des wenigstens einen Audiosignals 3 in die Fahrgastzelle 4 auf Grundlage einer eine Bewegung wenigstens eines Objekts 7, insbesondere eines anderen Verkehrsteilnehmers, relativ zu dem Kraftfahrzeug 1 beschreibenden Bewegungsinformation.

## Patentansprüche

1. Kraftfahrzeug (1), umfassend eine Vorrichtung (2) zur Ausgabe eines Audiosignals (3), in eine Fahrgastzelle (4) des Kraftfahrzeugs (1), welche umfasst:
eine mehrere in der Fahrgastzelle (4) des Kraftfahrzeugs (1) angeordnete Audioausgabeelemente (5a - 5d) umfassende Audioausgabeeinrichtung (5) zur Ausgabe wenigstens eines Audiosignals (3), welches Audioinhalte in Form von Musik und/oder Sprache beinhaltet, in die Fahrgastzelle (4) des Kraftfahrzeugs (1),
eine der Audioausgabeeinrichtung (5) zuordenbare oder zugeordnete Steuereinrichtung (6) zur Steuerung der Ausgabe des wenigstens einen Audiosignals (3) über jeweilige Audioausgabeelemente (5a - 5d),
wobei die Steuereinrichtung (6) eingerichtet ist, die Ausgabe des wenigstens einen Audiosignals (3) in die Fahrgastzelle (4) des Kraftfahrzeugs (1) auf Grundlage einer eine Bewegung wenigstens eines Objekts (7), insbesondere eines Verkehrsteilnehmers, relativ zu dem Kraftfahrzeug (1) beschreibenden Bewegungsinformation zu steuern, **dadurch gekennzeichnet, dass**
die Steuereinrichtung (6) eingerichtet ist, die Steuerung der Ausgabe des wenigstens einen Audiosignals (3) in die Fahrgastzelle (4) des Kraftfahrzeugs (1) während der Ausgabe des wenigstens einen Audiosignals (3) durch gezielte Steuerung der Ausgaberichtung des wenigstens einen Audiosignals (3) zu nutzen, um einem Fahrzeuginsassen eine Information über sich im Umfeld um das Kraftfahrzeug (1) befindliche, relativ zu dem Kraftfahrzeug (1) bewegende Objekte (7) zu vermitteln.

2. Kraftfahrzeug nach Anspruch 1, **dadurch gekennzeichnet, dass** die Audioausgabeeinrichtung (5) zur, insbesondere parallelen bzw. zeitgleichen, Ausgabe wenigstens zweier unterschiedlicher Audiosignale (3) in die Fahrgastzelle (4) des Kraftfahrzeugs (1) eingerichtet ist, wobei ein erstes Audiosignal (3) ein Musik- oder Sprachsignal ist und ein zweites Audiosignal (3) insbesondere ein, insbesondere seitens der Steuereinrichtung (6) erzeugtes, Bewegungsinformationssignal ist, wobei die Steuereinrichtung (6) optional eingerichtet ist, wenigstens die Ausgabe des Bewegungsinformationssignals in die Fahrgastzelle (4) des Kraftfahrzeugs (1) auf Grundlage der eine Bewegung wenigstens eines Objekts (7), insbesondere eines Verkehrsteilnehmers, relativ zu dem Kraftfahrzeug (1) beschreibenden Bewegungsinformation zu steuern.

3. Kraftfahrzeug nach einem der vorhergehenden Ansprüche, **gekennzeichnet durch** eine der Steuereinrichtung (6) zuordenbare oder zugeordnete Erfassungseinrichtung (8), welche zur Erfassung einer Bewegung wenigstens eines Objekts (7) relativ zu dem Kraftfahrzeug (1) und zur Erzeugung der eine Bewegung wenigstens eines erfassten Objekts (7) relativ zu dem Kraftfahrzeug (1) beschreibenden Bewegungsinformation eingerichtet ist, wobei optional die Erfassungseinrichtung (8) zur Erzeugung eines das Kraftfahrzeug (a) zumindest abschnittsweise, insbesondere vollständig, umgebenden Erfassungsbereichs (9), in welchem eine Bewegung wenigstens eines Objekts (7) relativ zu dem Kraftfahrzeug (1) erfassbar ist, eingerichtet ist.

4. Kraftfahrzeug nach einem der vorhergehenden Ansprüche, **dadurch gekennzeichnet, dass** die Erfassungseinrichtung (8) zur Erfassung von sich in gleicher oder entgegengesetzter Richtung wie das Kraftfahrzeug (1) relativ zu dem Kraftfahrzeug (1) bewegender Objekte (7) eingerichtet ist.

5. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals (3) auf Grundlage einer eine Bewegung eines sich links des Kraftfahrzeugs (1) bewegenden Objekts (7) beschreibenden Bewegungsinformation
über links einer Längsmittelachse (LA) des Kraftfahrzeugs (1) angeordnete Audioausgabeelemente (5a - 5d), insbesondere über links einer Längsmittelachse (LA) des Kraftfahrzeugs (1) angeordnete Audioausgabeelemente (5a - 5d) mit einer im Vergleich höheren Intensität als über rechts der Längsmittelachse (LA) des Kraftfahrzeugs (1) angeordnete Audioausgabeelemente (5a - 5d), zu steuern.

6. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals (3) auf Grundlage einer eine Bewegung eines sich rechts des Kraftfahrzeugs (1) bewegenden Objekts (7) beschreibenden Bewegungsinformation
über rechts einer Längsmittelachse (LA) des Kraftfahrzeugs (1) angeordnete Audioausgabeelemente (5a - 5d), insbesondere über rechts einer Längsmittelachse (LA) des Kraftfahrzeugs (1) angeordnete Audioausgabeelemente (5a - 5d) mit einer im Vergleich höheren Intensität als über links der Längsmittelachse (LA) des Kraftfahrzeugs (1) angeordnete Audioausgabeelemente (5a - 5d), zu steuern.

7. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals (3) auf Grundlage einer eine Bewegung eines sich frontal auf das Kraftfahrzeug (1) zu bewegenden Objekts (7) beschreibenden Bewegungsinformation
über vor einer Quermittelachse (QA) des Kraftfahrzeugs (1) angeordnete Audioausgabeelemente (5a - 5d) mit einer im Vergleich zu einer vordefinierbaren oder vordefinierten Referenzintensität höheren Intensität, insbesondere als über hinter der Quermittelmittelachse (QA) des Kraftfahrzeugs (1) angeordnete Audioausgabeelemente (5a - 5d), zu steuern.

8. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals (3) auf Grundlage einer eine Bewegung eines sich von dem Kraftfahrzeug (1) weg bewegenden Objekts (7) beschreibenden Bewegungsinformation
über hinter einer Quermittelachse (QA) des Kraftfahrzeugs (1) angeordnete Audioausgabeelemente (5a - 5d) mit einer im Vergleich zu einer vordefinierbaren oder vordefinierten Referenzintensität höheren Intensität, insbesondere als über vor der Quermittelmittelachse (QA) des Kraftfahrzeugs (1) angeordnete Audioausgabeelemente (5a - 5d), zu steuern.

9. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals auf Grundlage einer eine Bewegung eines sich in Fahrtrichtung von links auf das Kraftfahrzeug (1) zu bewegenden Objekts (7) beschreibenden Bewegungsinformation derart zu steuern, dass
das Audiosignal (3) zunächst, insbesondere vor Passieren des Kraftfahrzeugs (1), nur über in Fahrtrichtung vor der Quermittelachse und links der Längsmittelachse des Kraftfahrzeugs (1) angeordnete Audioausgabeelemente (5a - 5d), sodann, insbesondere bei Passieren des Kraftfahrzeugs (1), über vor und hinter der Quermittelachse (QA) und links der Längsmittelachse (LA) des Kraftfahrzeugs (1) angeordnete Audioausgabeelemente und schließlich, insbesondere nach Passieren des Kraftfahrzeugs (1), nur über in Fahrtrichtung hinter der Quermittelachse (QA) und links der Längsmittelachse (LA) des Kraftfahrzeugs (1) angeordnete Audioausgabeelemente (5a - 5d) ausgebbar oder ausgegeben ist; und/oder
die Steuereinrichtung (6) eingerichtet ist, die Ausgabe eines auszugebenden Audiosignals (3) auf Grundlage einer eine Bewegung eines sich in Fahrtrichtung von rechts auf das Kraftfahrzeug (1) zu bewegenden Objekts (7) beschreibenden Bewegungsinformation derart zu steuern, dass
das Audiosignal (3) zunächst, insbesondere vor Passieren des Kraftfahrzeugs (1), nur über in Fahrtrichtung vor der Quermittelachse (QA) und rechts der Längsmittelachse (LA) des Kraftfahrzeugs (1) angeordnete Audioausgabeelemente (5a - 5d), sodann, insbesondere bei Passieren des Kraftfahrzeugs (1) , über vor und hinter der Quermittelachse (QA) und rechts der Längsmittelachse (LA) des Kraftfahrzeugs (1) angeordnete Audioausgabeelemente (5a - 5d) und schließlich, insbesondere nach Passieren des Kraftfahrzeugs (1), nur über in Fahrtrichtung hinter der Quermittelachse (QA) und rechts der Längsmittelachse (LA) des Kraftfahrzeugs (1) angeordnete Audioausgabeelemente (5a - 5d) ausgebbar oder ausgegeben ist.

10. Kraftfahrzeug nach einem der vorhergehenden Ansprüche, **dadurch gekennzeichnet, dass** die Steuereinrichtung (6) eingerichtet ist,
die Ausgabe eines auszugebenden Audiosignals (3) auf Grundlage einer eine Bewegung eines von dem Kraftfahrzeug (1) links zu überholenden bzw. überholten bewegenden Objekts (7) beschreibenden Bewegungsinformation derart zu steuern, dass das Audiosignal (3) zunächst, insbesondere vor Passieren des Kraftfahrzeugs (1), nur über in Fahrtrichtung hinter der Quermittelachse (QA) und links der Längsmittelachse (LA) des Kraftfahrzeugs (1) angeordnete Audioausgabeelemente (5a - 5d), sodann, insbesondere bei Passieren des zu überholenden Objekts (7), über vor und hinter der Quermittelachse (QA) und links der Längsmittelachse (LA) des Kraftfahrzeugs (1) angeordnete Audioausgabeelemente (5a - 5d) und schließlich, insbesondere nach Passieren des zu überholenden Objekts (7), nur über in Fahrtrichtung vor der Quermittelachse (QA) und links der Längsmittelachse (LA) des Kraftfahrzeugs (1) angeordnete Audioausgabeelemente (5a - 5d) ausgebbar oder ausgegeben ist; und/oder
die Steuereinrichtung (6) eingerichtet ist, die Ausgabe eines auszugebenden Audiosignals (3) auf Grundlage einer eine Bewegung eines von dem Kraftfahrzeug (1) rechts zu überholenden bzw. überholten bewegenden Objekts (7) derart zu steuern, dass das Audiosignal (3) zunächst, insbesondere vor Passieren des Kraftfahrzeugs (1), nur über in Fahrtrichtung hinter der Quermittelachse (QA) und rechts der Längsmittelachse (LA) des Kraftfahrzeugs (1) angeordnete Audioausgabeelemente (5a - 5d), sodann, insbesondere bei Passieren des zu überholenden Objekts (7), über vor und hinter der Quermittelachse (QA) und rechts der Längsmittelachse (LA) des Kraftfahrzeugs (1) angeordnete Audioausgabeelemente (5a - 5d) und schließlich,
insbesondere nach Passieren des zu überholenden Objekts (7), nur über in Fahrtrichtung vor der Quermittelachse (QA) und rechts der Längsmittelachse (LA) des Kraftfahrzeugs (1) angeordnete Audioausgabeelemente (5a - 5d) auszugeben.

11. Kraftfahrzeug nach einem der vorhergehenden Ansprüche, **dadurch gekennzeichnet, dass** die Steuereinrichtung (6) eingerichtet ist, eine Änderung der Ausgabe eines auszugebenden Audiosignals (3) von einer Ausgabe des Audiosignals (3) über ein erstes Audioausgabeelement (5a - 5d) auf eine Ausgabe des Audiosignals (3) über wenigstens ein zweites Audioausgabeelement (5a - 5d) stufenlos durchzuführen.

12. Kraftfahrzeug nach einem der vorhergehenden Ansprüche, **dadurch gekennzeichnet, dass** die Steuereinrichtung (6) eingerichtet ist, die Ausgabe eines auszugebenden Audiosignals (3) auf Grundlage einer eine Bewegung eines sich in Fahrtrichtung von links auf das Kraftfahrzeug (1) zu oder weg bewegenden Objekts (7) und eines sich in von rechts auf das Kraftfahrzeug (1) zu oder weg bewegenden Objekts (7) derart zu steuern, dass die Ausgabe eines Audiosignals (3) priorisiert über links oder rechts der Längsmittelachse (LA) des Kraftfahrzeugs (1) angeordnete Audioausgabeelemente (5a - 5d) erfolgt.

13. Kraftfahrzeug nach einem der vorhergehenden Ansprüche, **dadurch gekennzeichnet, dass** die Bewegungsinformation eine Beschleunigung oder Geschwindigkeit, insbesondere eine Absolut- oder Relativgeschwindigkeit, eines sich relativ zu dem Kraftfahrzeug (1) bewegenden Objekts (7) beschreibt, wobei
die Steuereinrichtung (6) eingerichtet ist, die Ausgabe des Audiosignals (3) in die Fahrgastzelle (4) des Kraftfahrzeugs (1) auf Grundlage einer durch die Bewegungsinformation beschriebenen Beschleunigung oder Geschwindigkeit des sich relativ zu dem Kraftfahrzeug (1) bewegenden Objekts (7) zu steuern, insbesondere derart, dass im Hinblick auf eine vordefinierbare oder vordefinierte Referenzbeschleunigung oder -geschwindigkeit höhere Beschleunigungen oder Geschwindigkeiten des sich relativ zu dem Kraftfahrzeug (1) bewegenden Objekts (7) mit einer Ausgabe des Audiosignals (3) mit einer im Vergleich zu einer vordefinierbaren oder vordefinierten Referenzintensität höheren Intensität ausgegeben wird.

14. Verfahren zur Ausgabe wenigstens eines Audiosignals (3) in eine Fahrgastzelle (4) eines Kraftfahrzeugs (1) nach einem der Ansprüche 1 bis 13, wobei eine Steuerung der Ausgabe des wenigstens einen Audiosignals (3), welches Audioinhalte in Form von Musik und/oder Sprache beinhaltet, in die Fahrgastzelle (4) des Kraftfahrzeugs (1) auf Grundlage einer eine Bewegung wenigstens eines Objekts (7), insbesondere eines Verkehrsteilnehmers, relativ zu dem Kraftfahrzeug (1) beschreibenden Bewegungsinformation erfolgt, wobei die Steuerung der Ausgabe des wenigstens einen Audiosignals (3) in die Fahrgastzelle (4) des Kraftfahrzeugs (1) während der Ausgabe des wenigstens einen Audiosignals (3) durch gezielte Steuerung der Ausgaberichtung des wenigstens einen Audiosignals (3) zu nutzen, um einem Fahrzeuginsassen eine Information über sich im Umfeld um das Kraftfahrzeug (1) befindliche, relativ zu dem Kraftfahrzeug (1) bewegende Objekte (7) zu vermitteln.

## Claims

1. Motor vehicle (1) comprising a device (2) for outputting an audio signal (3) into a passenger cell (4) of the motor vehicle (1) comprising:
a plurality of audio output elements (5a - 5d) arranged in the passenger compartment (4) of the motor vehicle (1) comprising audio output means (5) for outputting at least one audio signal (3) which includes audio content in the form of music and/or speech into the passenger compartment (4) of the motor vehicle (1),
a control device (6) that can be assigned or assigned to the audio output device (5) for controlling the output of at least one audio signal (3) via respective audio output elements (5a - 5d), wherein
The control device (6) is configured to control the output of at least one audio signal (3) into the passenger cell (4) of the motor vehicle (1) on the basis of a movement of at least one object (7), in particular a road user, relative to the motor vehicle (1) descriptive motion information, **characterized in that**
The control device (6) is configured to use the control of the output of at least one audio signal (3) into the passenger cell (4) of the motor vehicle (1) during the output of at least one audio signal (3) by targeted control of the output direction of at least one audio signal (3) to provide a vehicle occupant with information about itself in the environment around the motor vehicle (1), relative to the motor vehicle (1) moving objects (7).

2. Motor vehicle according to claim 1, **characterized in that** the audio output device (5) for, in particular parallel or simultaneous, output at least two different audio signals (3) into the passenger cell (4) of the motor vehicle (1) is arranged, wherein a first audio signal (3) is a music or voice signal and a second audio signal (3) is in particular a, in particular generated by the control device (6), movement information signal, wherein the control device (6) is optionally arranged to control at least the output of the movement information signal into the passenger cell (4) of the motor vehicle (1) on the basis of the one movement of at least one object (7), in particular of a road user, relative to the motor vehicle (1) descriptive movement information.

3. Motor vehicle according to one of the preceding claims, **characterized by** a control device (6) assignable or associated detection device (8), which is set up for detecting a movement of at least one object (7) relative to the motor vehicle (1) and for generating the one movement of at least one detected object (7) relative to the motor vehicle (1) descriptive movement information, wherein optionally the detection device (8) is set up for generating a motor vehicle (a) at least partially, in particular completely, surrounding detection area (9), in which a movement of at least one object (7) relative to the motor vehicle (1) is detectable.

4. Motor vehicle according to any one of the preceding claims, **characterized in that** the detection device (8) is set up for detecting objects (7) moving in the same or opposite direction as the motor vehicle (1) relative to the motor vehicle (1).

5. motor vehicle according to any one of the preceding claims, **characterized in that** the control device (6) is equipped,
the output of an audio signal to be output (3) based on motion information describing a movement of an object moving to the left of the motor vehicle (1) (7)
to control audio output elements (5a - 5d) arranged on the left of a longitudinal centre axis (LA) of the motor vehicle (1), in particular audio output elements (5a - 5d) arranged on the left of a longitudinal centre axis (LA) of the motor vehicle (1), with a comparatively higher intensity than audio output elements (5a - 5d) arranged on the right of the longitudinal centre axis (LA) of the motor vehicle (1).

6. Motor vehicle according to any one of the preceding claims, **characterized in that** the control device (6) is equipped,
the output of an audio signal to be output (3) based on motion information describing a movement of an object moving to the right of the motor vehicle (1) (7)
to control audio output elements (5a - 5d) arranged on the right of a longitudinal median axis (LA) of the motor vehicle (1), in particular on the right of a longitudinal median axis (LA) of the motor vehicle (1) with an audio output elements (5a - 5d) arranged in comparison higher intensity than on the left of the longitudinal median axis (LA) of the motor vehicle (1) arranged audio output elements (5a - 5d).

7. Motor vehicle according to any one of the preceding claims, **characterized in that** the control device (6) is equipped,
the output of an audio signal to be output (3) on the basis of motion information describing a movement of an object to be moved frontally onto the motor vehicle (1) (7)
control via audio output elements (5a - 5d) arranged in front of a transverse centre axis (QA) of the motor vehicle (1) with a higher intensity compared to a predefined or predefined reference intensity, in particular than via audio output elements (5a - 5d) arranged behind the transverse centre axis (QA) of the motor vehicle (1).

8. Motor vehicle according to any one of the preceding claims, **characterized in that** the control device (6) is equipped,
the output of an audio signal to be output (3) based on a motion information describing a movement of an object moving away from the motor vehicle (1) (7)
to control audio output elements (5a - 5d) arranged behind a transverse centre axis (QA) of the motor vehicle (1) with a higher intensity compared to a predefined or predefined reference intensity, in particular than via audio output elements (5a - 5d) arranged in front of the transverse centre axis (QA) of the motor vehicle (1).

9. Motor vehicle according to any one of the preceding claims, **characterized in that** the control device (6) is equipped,
to control the output of an audio signal to be output on the basis of a movement of an object (7) to be moved in the direction of travel from the left to the motor vehicle (1) descriptive movement information in such a way that
the audio signal (3) is initially, in particular before passing the motor vehicle (1), only via audio output elements arranged in the direction of travel in front of the transverse centre axis and left of the longitudinal centre axis of the motor vehicle (1) (5a - 5d), then, in particular when passing the motor vehicle (1), via audio output elements arranged in front and behind the transverse centre axis (QA) and left of the longitudinal centre axis (LA) of the motor vehicle (1) and finally, in particular after passing the motor vehicle (1), only via audio output elements arranged in the direction of travel behind the transverse centre axis (QA) and the left longitudinal centre axis (LA) of the motor vehicle (1) (5a - 5d) is outputable or output; and/or
the control device (6) is configured to control the output of an audio signal (3) to be output on the basis of a movement of an object (7) to be moved in the direction of travel from the right to the motor vehicle (1) descriptive movement information in such a way that
the audio signal (3) is initially, in particular before passing the motor vehicle (1), only via audio output elements (5a - 5d) arranged in the direction of travel in front of the transverse centre axis (QA) and to the right of the longitudinal centre axis (LA) of the motor vehicle (1), then, in particular when passing the motor vehicle (1), via audio output elements (5a - 5d) arranged in front and behind the transverse centre axis (QA) and to the right of the longitudinal centre axis (LA) of the motor vehicle (1) and finally, in particular after passing the motor vehicle (1), only via audio output elements (5a - 5d) arranged in the direction of travel behind the transverse centre axis (QA) and to the right of the longitudinal centre axis (LA) of the motor vehicle (1) is outputable or output.

10. Motor vehicle according to any one of the preceding claims, **characterized in that** the control device (6) is equipped,
to control the output of an audio signal to be output (3) on the basis of a movement of a moving object (7) to be overtaken or overtaken by the motor vehicle (1) on the left describing movement information such that
the audio signal (3) can be output or output initially, in particular before passing the motor vehicle (1), only via audio output elements (5a - 5d) arranged in the direction of travel behind the transverse centre axis (QA) and left of the longitudinal centre axis (LA) of the motor vehicle (1), then, in particular when passing the object to be overtaken (7), via audio output elements (5a - 5d) arranged in front of and behind the transverse centre axis (QA) and left of the longitudinal centre axis (LA) of the motor vehicle (1) and finally, in particular after passing the object to be overtaken (7), only via audio output elements (5a - 5d) arranged in the direction of travel in front of the transverse centre axis (QA) and left of the longitudinal centre axis (LA) of the motor vehicle (1); and/or
the control device (6) is configured to control the output of an audio signal to be output (3) on the basis of a movement of a moving object (7) to be overtaken or overtaken by the motor vehicle (1) to the right in such a way that the audio signal (3) initially, in particular before passing the motor vehicle (1), only via audio output elements (5a - 5d) arranged in the direction of travel behind the transverse centre axis (QA) and to the right of the longitudinal centre axis (LA) of the motor vehicle (1), then, in particular when passing the object to be overtaken (7), via audio output elements (5a - 5d) arranged in front of and behind the transverse centre axis (QA) and to the right of the longitudinal centre axis (LA) of the motor vehicle (1) and finally, in particular after passing the object to be overtaken (7), only via audio output elements (5a - 5d) arranged in the direction of travel in front of the transverse centre axis (QA) and to the right of the longitudinal centre axis (LA) of the motor vehicle (1).

11. Motor vehicle according to any one of the preceding claims, **characterized in that** the control device (6) is configured to continuously perform a change in the output of an audio signal to be output (3) from an output of the audio signal (3) via a first audio output element (5a - 5d) to an output of the audio signal (3) via at least a second audio output element (5a - 5d).

12. Motor vehicle according to one of the preceding claims, **characterized in that** the control device (6) is configured to control the output of an audio signal to be output (3) on the basis of a movement of an object moving in the direction of travel from the left to or away from the motor vehicle (1) (7) and of an object (7) moving from the right to or away from the motor vehicle (1) in such a way that the output of an audio signal (3) is prioritised over the left or right of the longitudinal center axis (LA) of the motor vehicle (1) arranged audio output elements (5a - 5d).

13. Motor vehicle according to one of the preceding claims, **characterized in that** the motion information describes an acceleration or velocity, in particular an absolute or relative velocity, of an object moving relative to the motor vehicle (1) (7), wherein
the control device (6) is configured to control the output of the audio signal (3) into the passenger cell (4) of the motor vehicle (1) on the basis of an acceleration or speed of the object (7) moving relative to the motor vehicle (1) described by the motion information, in particular such that, with regard to a predefined or predefined reference acceleration or speed, higher accelerations or speeds of the object (7) moving relative to the motor vehicle (1) are output with an output of the audio signal (3) with a higher intensity compared to a predefined or predefined reference intensity.

14. Method for outputting at least one audio signal (3) into a passenger cell (4) of a motor vehicle (1) according to any one of claims 1 to 13, wherein a control of the output of at least one audio signal (3), which includes audio content in the form of music and / or speech, in the passenger cell (4) of the motor vehicle (1) is carried out on the basis of a movement of at least one object (7), in particular a road user, relative to the motor vehicle (1) descriptive movement information, wherein the control of the output of at least one audio signal (3) in the passenger cell (4) of the motor vehicle (1) during the output of at least one audio signal (3) by targeted control of the output direction of at least one audio signal (3) to convey to a vehicle occupant information about itself in the environment around the motor vehicle (1), relative to the motor vehicle (1) moving objects (7).

## Revendications

1. Véhicule à moteur (1), comprenant un dispositif (2) d'émission d'un signal audio (3), dans une cabine (4) du véhicule à moteur (1), comprenant:
un dispositif de sortie audio (5) comportant plusieurs éléments de sortie audio (5a - 5d) disposés dans la cabine (4) du véhicule à moteur (1), destiné à émettre au moins un signal audio (3) contenant du contenu audio sous forme de musique et/ou de voix dans la cabine (4) du véhicule à moteur (1),
un dispositif de commande (6) rattachable ou associé au dispositif de sortie audio (5) pour contrôler la sortie d'au moins un signal audio (3) par l'intermédiaire des éléments de sortie audio correspondants (5a - 5d), dans lequel:
le dispositif de commande (6) est conçu pour commander la sortie d'au moins un signal audio (3) dans l'habitacle (4) du véhicule à moteur (1) sur la base d'une information sur le mouvement décrivant un mouvement d'au moins un objet (7), en particulier d'un usager de la route, par rapport au véhicule à moteur (1), **caractérisée en ce que**:
le dispositif de commande (6) est conçu pour utiliser la commande de la sortie d'au moins un signal audio (3) dans l'habitacle (4) du véhicule à moteur (1) pendant la sortie d'au moins un signal audio (3) en contrôlant de manière ciblée le sens de sortie d'au moins un signal audio (3) afin de fournir à un occupant du véhicule une information sur les objets (7) se trouvant à proximité du véhicule à moteur (1) et se déplaçant par rapport au véhicule à moteur (1).

2. Véhicule à moteur selon la revendication 1, **caractérisé en ce que** le dispositif de sortie audio (5) est installé dans l'habitacle (4) du véhicule à moteur (1) pour la sortie, notamment parallèle ou simultanée, d'au moins deux signaux audio différents (3), un premier signal audio (3) étant un signal musical ou vocal et un second signal audio (3) étant notamment un signal d'information de mouvement, produit notamment par le dispositif de commande (6), le dispositif de commande (6) étant configuré en option pour commander au moins la sortie du signal d'information de mouvement dans l'habitacle (4) du véhicule à moteur (1) sur la base d'un mouvement d'au moins un objet (7), en particulier d'un usager de la route, par rapport à l'information de mouvement décrivant le véhicule à moteur (1).

3. Véhicule à moteur selon l'une quelconque des revendications précédentes, **caractérisé par** un dispositif de détection (8) attribuable ou associé au dispositif de commande (6), qui est conçu pour détecter un mouvement d'au moins un objet (7) par rapport au véhicule à moteur (1) et pour produire l'information descriptive d'un mouvement d'au moins un objet (7) par rapport au véhicule à moteur (1), étant entendu que le dispositif de détection (8) est conçu, en option, pour produire une zone de détection (9) entourant le véhicule à moteur (a) au moins par sections, en particulier dans sa totalité, dans laquelle un mouvement d'au moins un objet (7) par rapport au véhicule à moteur (1) peut être détecté.

4. Véhicule à moteur selon l'une quelconque des revendications précédentes, **caractérisé en ce que** le dispositif de détection (8) est équipé pour détecter des objets se déplaçant dans la même direction ou dans une direction opposée à celle du véhicule à moteur (1) par rapport au véhicule à moteur (1) (7).

5. Véhicule à moteur selon l'une quelconque des revendications précédentes, **caractérisé en ce que** le dispositif de commande (6) est installé,
la sortie d'un signal audio (3) à émettre sur la base d'une information de mouvement décrivant un mouvement d'un objet se déplaçant à gauche du véhicule à moteur (1) (7) commander les éléments de sortie audio (5a - 5d) situés à gauche d'un axe longitudinal médian (LA) du véhicule à moteur (1), notamment les éléments de sortie audio (5a - 5d) situés à gauche d'un axe longitudinal médian (LA) du véhicule à moteur (1), avec une intensité comparativement plus élevée que les éléments de sortie audio (5a - 5d) situés à droite de l'axe longitudinal médian (LA) du véhicule à moteur (1).

6. Véhicule à moteur selon l'une quelconque des revendications précédentes, **caractérisé en ce que** le dispositif de commande (6) est installé,
la sortie d'un signal audio (3) à émettre sur la base d'une information de mouvement décrivant un mouvement d'un objet se déplaçant à droite du véhicule à moteur (1) (7)
contrôler les éléments de sortie audio (5a - 5d) situés à droite d'un axe longitudinal médian (LA) du véhicule à moteur (1), notamment les éléments de sortie audio (5a - 5d) situés à droite d'un axe longitudinal médian (LA) du véhicule à moteur (1), avec une intensité comparativement plus élevée que les éléments de sortie audio (5a - 5d) situés à gauche de l'axe longitudinal médian (LA) du véhicule à moteur (1).

7. Véhicule à moteur selon l'une quelconque des revendications précédentes, **caractérisé en ce que** le dispositif de commande (6) est installé,
la sortie d'un signal audio (3) à émettre sur la base d'une information de mouvement décrivant un mouvement d'un objet devant se déplacer frontalement sur le véhicule à moteur (1) (7)
commande au moyen d'éléments de sortie audio (5a - 5d) placés devant un axe médian transversal (QA) du véhicule à moteur (1), d'une intensité supérieure à une intensité de référence prédéfinie ou prédéfinie, notamment au moyen d'éléments de sortie audio (5a - 5d) placés derrière l'axe médian transversal (QA) du véhicule à moteur (1).

8. Véhicule à moteur selon l'une quelconque des revendications précédentes, **caractérisé en ce que** le dispositif de commande (6) est installé,
la sortie d'un signal audio (3) à émettre sur la base d'informations de mouvement décrivant un mouvement d'un objet se déplaçant loin du véhicule à moteur (1) (7);
commander au moyen d'éléments de sortie audio (5a - 5d) placés derrière un axe transversal médian (QA) du véhicule à moteur (1), d'une intensité supérieure à une intensité de référence prédéfinie ou prédéfinie, notamment au moyen d'éléments de sortie audio (5a - 5d) placés devant l'axe transversal médian (QA) du véhicule à moteur (1).

9. Véhicule à moteur selon l'une quelconque des revendications précédentes, **caractérisé en ce que** le dispositif de commande (6) est installé,
contrôler la sortie d'un signal audio à émettre sur la base d'une information de mouvement décrivant un mouvement d'un objet (7) se déplaçant dans le sens de la marche depuis la gauche vers le véhicule à moteur (1), de telle sorte que:
le signal audio (3) ne peut être émis ou émis, dans un premier temps, notamment avant le passage du véhicule à moteur (1), que par l'intermédiaire d'éléments de sortie audio (5a - 5d) placés dans le sens de la marche devant l'axe transversal médian et à gauche de l'axe longitudinal médian du véhicule à moteur (1), puis, en particulier en cas de passage du véhicule à moteur (1), par l'intermédiaire d'éléments de sortie audio placés devant et derrière l'axe transversal médian (QA) et à gauche de l'axe longitudinal médian (LA) du véhicule à moteur (1), et enfin, en particulier après le passage du véhicule à moteur (1), uniquement par l'intermédiaire d'éléments de sortie audio (5a - 5d) placés dans le sens de la marche derrière l'axe transversal médian (QA) et à gauche de l'axe longitudinal médian (LA) du véhicule à moteur (1); et/ou
le dispositif de commande (6) est conçu pour commander la sortie d'un signal audio (3) à émettre sur la base d'une information de mouvement décrivant un mouvement d'un objet à déplacer dans le sens de la marche de la droite vers le véhicule à moteur (1) (7), de telle sorte que:
le signal audio (3) ne peut être émis ou émis que par l'intermédiaire d'éléments de sortie audio (5a - 5d) placés dans le sens de la marche avant l'axe transversal médian (QA) et à droite de l'axe longitudinal médian (LA) du véhicule à moteur (1), en particulier avant le passage du véhicule à moteur (1), puis, en particulier lors du passage du véhicule à moteur (1), par l'intermédiaire d'éléments de sortie audio (5a - 5d) placés devant et derrière l'axe transversal médian (QA) et à droite de l'axe longitudinal médian (LA) du véhicule à moteur (1), et enfin, en particulier après le passage du véhicule à moteur (1), uniquement par l'intermédiaire d'éléments de sortie audio (5a - 5d) placés dans le sens de la marche derrière l'axe transversal médian (QA) et à droite de l'axe longitudinal médian (LA) du véhicule à moteur (1).

10. Véhicule à moteur selon l'une quelconque des revendications précédentes, **caractérisé en ce que** le dispositif de commande (6) est installé,
contrôler la sortie d'un signal audio (3) à émettre sur la base d'informations descriptives d'un mouvement d'un objet en mouvement (7) à dépasser ou à dépasser par le véhicule à moteur (1) à gauche, de telle sorte que:
le signal audio (3) ne peut être émis ou émis que par l'intermédiaire d'éléments de sortie audio (5a - 5d) situés dans le sens de la marche derrière l'axe transversal médian (QA) et à gauche de l'axe longitudinal médian (LA) du véhicule à moteur (1), en particulier avant le passage du véhicule à moteur (1), puis par l'intermédiaire d'éléments de sortie audio (5a - 5d) situés devant et derrière l'axe transversal médian (QA) et à gauche de l'axe longitudinal médian (LA) du véhicule à moteur (1), en particulier en cas de passage de l'objet à dépasser (7), et enfin uniquement par l'intermédiaire d'éléments de sortie audio (5a - 5d) situés dans le sens de la marche devant l'axe transversal médian (QA) et à gauche de l'axe longitudinal médian (LA) du véhicule à moteur (1); et/ou
le dispositif de commande (6) est conçu pour commander la sortie d'un signal audio (3) sur la base d'un mouvement d'un objet en mouvement devant être dépassé ou remis à neuf par le véhicule (1) à droite (7), de telle sorte que le signal audio (3) ne soit émis que par l'intermédiaire d'éléments de sortie audio (5a - 5d) placés dans le sens de la marche derrière l'axe transversal médian (QA) et à droite de l'axe longitudinal médian (LA) du véhicule (1), en particulier avant de passer le véhicule (1), puis par l'intermédiaire d'éléments de sortie audio (5a - 5d) placés devant et derrière l'axe transversal (QA) et à droite de l'axe longitudinal médian (LA) du véhicule (1), en particulier lors du passage de l'objet à dépasser (7), et enfin uniquement par l'intermédiaire d'éléments de sortie audio (5a - 5d) placés dans le sens de la marche devant l'axe transversal médian (QA) et à droite de l'axe longitudinal (LA) du véhicule (1), en particulier après le passage de l'objet à dépasser (7).

11. Véhicule automobile selon l'une quelconque des revendications précédentes, **caractérisé en ce que** le dispositif de commande (6) est équipé pour effectuer en continu une modification de la sortie d'un signal audio (3) à émettre d'une sortie du signal audio (3) via un premier élément de sortie audio (5a - 5d) à une sortie du signal audio (3) via au moins un deuxième élément de sortie audio (5a - 5d).

12. Véhicule à moteur selon l'une quelconque des revendications précédentes, **caractérisé en ce que** le dispositif de commande (6) est équipé pour commander la sortie d'un signal audio (3) à émettre sur la base d'un mouvement d'un objet (7) se déplaçant vers ou depuis la gauche vers le véhicule à moteur (1) dans le sens de la marche et d'un objet (7) se déplaçant vers ou depuis la droite vers le véhicule à moteur (1) de telle sorte que la sortie d'un signal audio (3) s'effectue prioritairement par l'intermédiaire d'éléments de sortie audio (5a - 5d) situés à gauche ou à droite de l'axe longitudinal médian (LA) du véhicule à moteur (1).

13. Véhicule à moteur selon l'une quelconque des revendications précédentes, **caractérisé en ce que** l'information sur le mouvement décrit une accélération ou une vitesse, en particulier une vitesse absolue ou relative, d'un objet se déplaçant par rapport au véhicule à moteur (1) (7), dans lequel:
le dispositif de commande (6) est conçu pour contrôler la sortie du signal audio (3) dans l'habitacle (4) du véhicule à moteur (1) sur la base d'une accélération ou d'une vitesse de l'objet (7) se déplaçant par rapport au véhicule à moteur (1), telle que décrite par l'information sur le mouvement, notamment de manière à produire des accélérations ou des vitesses plus élevées de l'objet (7) se déplaçant par rapport au véhicule à moteur (1), en vue d'une accélération ou d'une vitesse de référence prédéfinie ou prédéfinie, avec une sortie du signal audio (3) d'une intensité plus élevée par rapport à une intensité de référence prédéfinie ou prédéfinie.

14. Procédé de sortie d'au moins un signal audio (3) dans une cellule passagers (4) d'un véhicule à moteur (1) selon l'une quelconque des revendications 1 à 13, dans lequel une commande de sortie d'au moins un signal audio (3) contenant du contenu audio sous forme de musique et/ou de parole est effectuée dans la cellule passagers (4) du véhicule à moteur (1) sur la base d'une information de mouvement décrivant un mouvement d'au moins un objet (7), en particulier d'un usager de la route, par rapport au véhicule à moteur (1), dans lequel la commande de sortie d'au moins un signal audio (3) dans la cellule passagers (4) du véhicule à moteur (1) est effectuée pendant la sortie d'au moins un signal audio (3) en contrôlant de manière ciblée la direction de sortie d'au moins un signal audio (3) afin de transmettre à un occupant du véhicule à moteur une information sur les objets (7) se trouvant autour du véhicule à moteur (1) et se déplaçant par rapport au véhicule à moteur (1).
